(19) **Europäisches Patentamt / European Patent Office / Office européen des brevets**

(11) **EP 2 983 156 B1**

(12) **FASCICULE DE BREVET EUROPEEN**

(45) Date de publication et mention
de la délivrance du brevet:
**24.07.2019 Bulletin 2019/30**

(51) Int Cl.:
***G09C 1/00*** *(2006.01)*   ***H04L 9/00*** *(2006.01)*

(21) Numéro de dépôt: **14306247.9**

(22) Date de dépôt: **06.08.2014**

(54) **SYSTÈME ET PROCÉDÉ DE PROTECTION DE CIRCUIT**

SYSTEM UND VERFAHREN ZUM SCHUTZ VON SCHALTKREISEN

SYSTEM AND METHOD FOR CIRCUIT PROTECTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**10.02.2016 Bulletin 2016/06**

(73) Titulaire: **Secure-IC SAS**
**35510 Cesson-Sévigné (FR)**

(72) Inventeurs:
• **Guilley, Sylvain**
**75013 Paris (FR)**
• **Porteboeuf, Thibault**
**75009 Paris (FR)**
• **Danger, Jean-Luc**
**92160 Antony (FR)**

(74) Mandataire: **Hnich-Gasri, Naïma et al**
**Marks & Clerk France**
**Immeuble Visium**
**22, avenue Aristide Briand**
**94117 Arcueil Cedex (FR)**

(56) Documents cités:
• Julien Bringer ET AL: "Orthogonal Direct Sum Masking" In: "LECTURE NOTES IN COMPUTER SCIENCE", 30 juin 2014 (2014-06-30), Springer Berlin Heidelberg, Berlin, Heidelberg, XP055170147, ISSN: 0302-9743 ISBN: 978-3-54-045234-8 vol. 8501, pages 40-56, DOI: 10.1007/978-3-662-43826-8_4, * section 2.1, 2.4, 3.1 algorithm 4 * * abrégé *
• BHASIN SHIVAM ET AL: "Hardware Trojan Horses in Cryptographic IP Cores", 2013 WORKSHOP ON FAULT DIAGNOSIS AND TOLERANCE IN CRYPTOGRAPHY, IEEE, 20 août 2013 (2013-08-20), pages 15-29, XP032501447, DOI: 10.1109/FDTC.2013.15 ISBN: 978-0-7695-5059-6 [extrait le 2013-10-07]
• ABRAMOVICI M ET AL: "Integrated circuit security: new threats and solutions", 5TH ANNUAL WORKSHOP ON CYBER SECURITY AND INFORMATION INTELLIGENCE RESEARCH 2009 (CSIIRW 09) : OAK RIDGE [AND KNOXVILLE], TENNESSEE, USA, 13 - 15 APRIL 2009, CURRAN, RED HOOK, NY, 13 avril 2009 (2009-04-13), pages 1-3, XP002686116, ISBN: 978-1-61738-002-0
• James L. Massey: "Linear codes with complementary duals", DISCRETE MATHEMATICS., vol. 106-107, 1 September 1992 (1992-09-01), pages 337-342, XP055374378, NL ISSN: 0012-365X, DOI: 10.1016/0012-365X(92)90563-U

EP 2 983 156 B1

## Description

### Domaine technique

La présente invention concerne de manière générale les circuits électroniques et en particulier des systèmes et procédés de protection de tels circuits électroniques.

### Art Antérieur

La fabrication des composants électroniques nécessite des procédés extrêmement complexes. En outre, la fabrication de tels composants nécessite une infrastructure complexe et coûteuse, telle que des usines de type fonderie pour fabriquer les circuits électroniques de ces composants électroniques généralement à partir de silicium et sur la base de masques. Il a été notamment observé que plus la technologie des composants électroniques se développe, plus le nombre d'usines requis pour leur fabrication diminue. De telles usines en nombre réduit doivent alors fonctionner avec des contraintes fortes pour pouvoir traiter les différents types de composants électroniques qui leur sont confiés, comme par exemple des contraintes de disponibilité et de cadence de production. Il devient alors difficile de choisir une fonderie en particulier. Pour optimiser les coûts de fabrication des composants électroniques en subissant des contraintes minimales (par exemple en termes de délai), il peut être nécessaire de faire fabriquer les composants dans d'autres zones géographiques. Dans certains secteurs technologiques, un tel choix peut être limité par l'absence de garanties offertes par le fondeur et en particulier par l'impossibilité de s'assurer de l'absence d'intentions malicieuses du fondeur dans le cadre de la fabrication des composants électroniques. Par exemple, il est difficile de contrôler si le fondeur :

- produit plus d'échantillons que demandé afin de les revendre sur un marché parallèle (notion d'« overbuilding » en langue anglo-saxonne signifiant sur fabrication) ;
- copie les plans des composants électroniques afin de les revendre ;
- modifie les plans des circuits électroniques (trucage) avant de les fabriquer.

La modification des circuits électroniques est une menace particulièrement sensible. Plusieurs motivations peuvent amener un fondeur à modifier malicieusement de tels plans, comme par exemple:

- pour rendre les circuits intentionnellement moins performants que ceux d'un concurrent ;
- pour y insérer une porte dérobée (dite « backdoor » en langue anglaise) afin d'avoir un accès privilégié à distance, ou simplement pour exfiltrer de l'information de façon discrète ;
- pour y insérer de la logique permettant de détruire le composant à distance (« kill switch » en langue anglo-saxonne).

De telles modifications malignes d'un circuit électronique sont généralement désignées par l'expression « cheval de Troie matériel ». Un cheval de Troie se compose de deux parties :

1. une partie d'activation (« trigger » en langue anglaise), qui espionne l'état du circuit pour en déduire une condition de déclenchement du cheval de Troie, et
2. une partie d'action, qui exécute (« payload » en langue anglaise) l'action malveillante, suite au déclenchement.

Pour exécuter son action malveillante, un cheval de Troie doit disposer simultanément des deux parties fonctionnelles « trigger » et « payload ».

Le piégeage par Cheval de Troie concerne, par extension, aussi bien les masques de circuits ASIC (acronyme pour « Application Specific Integrated Circuits » signifiant littéralement « circuits intégrés propres à une application »), les fichiers de configuration FPGA (« Field Programmable Gates Array » signifiant réseau de portes programmables *in situ*), que les codes machines « binaires » de processeurs.

Il existe deux approches classiques pour lutter contre les chevaux de Troie. La première approche, dite « approche proactive » consiste à prévenir l'insertion, tandis que la deuxième approche, dite « approche réactive » consiste à détecter l'insertion.

L'approche « réactive » est une solution palliative dans la mesure où elle repose sur une supposition selon laquelle un cheval de Troie a été effectivement introduit avec succès dans le circuit. Elle présente aussi une fiabilité difficilement quantifiable.

En effet, il peut exister des faux positifs (détection d'un cheval de Troie qui n'existe pas en réalité) et des faux négatifs (non-détection d'un cheval de Troie qui existe en réalité, par exemple s'il est suffisamment discret) ;
Il est également possible que certains échantillons d'un même composant électronique soient fabriqués avec un cheval de Troie tandis que d'autres échantillons du composant électronique sont fabriqués sans cheval de Troie, ce qui peut être possible, par exemple, si les masques ne présentent sur l'ensemble qu'une ou que peu de puces truquées. Si les tests de détection sont non-exhaustifs, mais appliqués au cas par cas (cette méthode est appelée « screening » en langue anglaise), il est possible que des échantillons infectés passent au travers des filtres.

Certaines méthodes de détection existantes sont directement embarquées dans le composant : on parle alors de moniteur. Il est aussi possible de faire effectuer la rétroconception complète du composant, et de vérifier l'intégrité des plans, comme décrit par exemple dans « Randy Torrance and Dick James. The State-of-the-Art in IC Reverse Engineering, In CHES, volume 5747 of LNCS, pages 363-381. Springer, September 6-9 2009. Lausanne, Switzerland». Cependant une telle étude par rétroconception du composant peut s'avérer particulièrement longue et complexe si le circuit contient plusieurs millions de portes, ce qui la rend très onéreuse.

D'autres méthodes de détection connues utilisent du test logique, comme par exemple la méthode décrite dans « M. Banga and M. S. Hsiao. ODETTE : A Non-Scan Design-for-Test Methodology for Trojan Détection in ICs. In International Workshop on Hardware-Oriented Security and Trust (HOST), IEEE, pages 18-23, 2011». Cet article décrit la réalisation d'une chaîne de logique (semblable à une chaîne de scan) mais qui est toujours activée dans la mesure où elle est connectée aux sorties $Q$ des bascules $D$ quand la sortie complémentaire $\overline{Q}$ est prise, et vice-versa. Une telle méthode de détection permet d'avoir deux fonctionnalités (une fonctionnalité voulue, puis une fonctionnalité de vérification) qui sont corrélées. Ainsi, on peut détecter une modification des spécifications du circuit via la fonctionnalité de vérification. Des techniques d'observation physique ont également été suggérées, comme l'imagerie ou la mesure de quantités physiques qui trahiraient la présence d'un cheval de Troie (temps de propagation dans les chemins logiques, émissions électromagnétiques, émission photonique, etc.) Dans de telles approches, pour obtenir une capacité de détection satisfaisante, il est nécessaire de disposer d'un échantillon de référence sain pour réaliser des mesures par différences, ce qui rend l'approche plus complexe et coûteuse.

L'approche « proactive » par prévention de l'insertion permet de remédier à certains inconvénients de l'approche « réactive ». Différentes solutions ont été proposées pour prévenir l'insertion d'un cheval de Troie. Une solution connue de prévention consiste à utiliser un procédé de conception qui ne laisse au fondeur qu'une partie de l'information sur le composant électronique, cette partie étant suffisamment limitée pour empêcher l'attaquant de concevoir un cheval de Troie utile, comme par exemple :

- un procédé consistant à fabriquer une partie du composant dans une fonderie donnée, puis l'autre partie du composant dans une autre fonderie (procédé dit de « split fonderies » en langue anglo-saxonne) ;

- un procédé reposant sur l'utilisation d'une mémoire programmable (comme des mémoires ou des zones reconfigurables de type FPGA) pour l'implémentation de certaines parties du composant, ce qui permet de programmer des parties critiques après fabrication, sans les divulguer au fondeur (Jarrod A. Roy, Farinaz Koushanfar, and Igor L. Markov. EPIC : Ending Piracy of Integrated Circuits. In DATE, pages 1069-1074. IEEE, 2008).

Toutefois, le passage par deux fonderies est spécifique à la fabrication des masques des circuits dédiés de type ASIC (acronyme pour « Application Specific Integrated Circuits » signifiant Circuits Intégrés Spécifique d'Application), induit des coûts importants de logistique, et réduit les rendements de production.

Par ailleurs, si l'utilisation d'une mémoire à configurer après fabrication permet de faire dépendre la fonctionnalité d'une clé, elle entraîne un surcoût important : il est estimé qu'une zone reprogrammable de type FPGA est 40 fois plus grande qu'une zone dédiée. Par ailleurs, pour la bonne clé, le circuit prend une sémantique fonctionnelle. Ainsi, cette méthode n'est pas à l'abri d'une analyse statique de structure partielle du circuit électrique (« netlist » en langue anglo-saxonne). Des outils puissants, tels que des « SAT-solveurs » ou des « SMT » ont été développés pour résoudre de tels problèmes booléens. Ainsi, à l'inverse des clés cryptographiques, dont aucune, en principe, n'est distinguée, il n'en va pas de même pour la contremesure par « soustraction » d'information du composant lors de sa fabrication. De plus, cette protection est statique, c'est-à-dire que rien n'empêche un attaquant de venir « sonder » la configuration manquante une fois le composant personnalisé.

Une autre solution de prévention consiste à réaliser un placement à grande densité, ce qui rend difficile l'insertion de chevaux de Troie de grande taille (Shivam Bhasin, Jean-Luc Danger, Sylvain Guilley, Xuan Thuy Ngo, and Laurent Sauvage. Hardware Trojan Horses in Cryptographic IP Cores. In Wieland Fischer and Jörn-Marc Schmidt, editors, FDTC, pages 15-29. IEEE, 2013).

Si une telle solution basée sur un accroissement de la densité de placement rend compliquée l'insertion d'un cheval de Troie de grande taille, il est possible en pratique pour un attaquant de réaliser et d'insérer un cheval de Troie suffisamment puissant dans un circuit cible, malgré une telle solution.

Une autre solution encore de prévention repose sur une opération d'obfuscation, comme le mélange des portes qui induit un routage complexe (dit « spaghetti routing » en langue anglo-saxonne) ou le camouflage comme décrit dans le brevet US 7994042 B2.

Ces techniques de prévention reposent soit sur une conception manuelle, soit sur une conception automatisée, comme des outils de conception assistée par ordinateur (CAD, pour « Computer Aided Design ») spécialisés dans la conception de circuits électroniques électroniques (EDA, pour « Electronic Design Automation » signifiant automatisation de conception électronique). De tels outils peuvent être guidés, par exemple via des scripts, pour réaliser ces protections. De tels outils sont en outre adaptés à conception des masques des circuits dédiés de type ASIC (acronyme pour « Application Specific Integrated Circuits » signifiant Circuits Intégrés Spécifique d'Application). Il existe également des outils similaires pour la conception des fichiers de configuration (dits « bitstreams » en langue anglaise) des circuits reconfigurables de type FPGA (« Field Programmable Gates Array ») et des programmes binaires des logiciels tournant sur processeurs.

Toutefois, de telles techniques de prévention d'insertion de cheval de Troie s'avèrent coûteuses et/ou peu prouvables. En effet, l'obfuscation, à la manière de la « cryptographie boîte blanche » est par nature non prouvable.

**Définition générale de l'invention**

L'invention vient améliorer la situation en proposant un procédé de protection de circuit booléen tel que défini dans la revendication 1 et un système de protection de circuit tel que défini dans la revendication 15. Certains modes de réalisation préférés sont décrits dans les revendications 1 à 14.

Les différents modes de réalisation de l'invention permettent ainsi de remédier à toute tentative d'espionnage et/ou de modification d'un circuit, en offrant une solution peu coûteuse qui peut être mise en oeuvre en modifiant le résultat de la phase de synthèse logique (compilation du code source) sans impact sur l'architecture technologique globale. Ils offrent également une solution prouvable et dynamique par l'utilisation de nombres aléatoires mis à jour à chaque événement d'horloge.

**Brève description des dessins**

D'autres caractéristiques et avantages de l'invention apparaîtront à l'aide de la description qui suit et des figures annexées dans lesquelles :

- La figure 1 est une représentation schématique d'un système de protection de circuit, selon certains modes de réalisation ;
- La figure 2 est un schéma illustrant le codage des données provenant de deux espaces vectoriels supplémentaires;
- La figure 3 est un organigramme représentant le procédé de protection selon certains modes de réalisation ;
- La figure 4 est un organigramme représentant le procédé de protection de variables mise en oeuvre au démarrage du circuit, selon certains modes de réalisation ;
- La figure 5 est un organigramme représentant le procédé de détection de fautes selon certains modes de réalisation ;
- La figure 6 représente un circuit protégé par le système de protection selon un premier mode de réalisation ;
- La figure 7 représente un circuit protégé par le système de protection selon un deuxième mode de réalisation avec détection de faute ;
- La figure 8 représente un circuit protégé par le système de protection selon un troisième mode de réalisation avec détection de faute;
- La figure 9 représente un circuit protégé par le système de protection, selon un quatrième mode de réalisation avec détection de faute, la vérification étant effectuée dans un autre espace ;
- La figure 10 est un organigramme représentant le procédé de génération de code selon certains modes de réalisation ;
- La figure 11 illustre la transformation d'un circuit pour protéger une variable de type signal vectorielle par application du procédé de protection,
- La figure 12 illustre la transformation d'un circuit pour protéger une variable de type porte logique séquentielle par application du procédé de protection,
- La figure 13 illustre la transformation d'un circuit pour protéger une variable de type porte combinatoire linéaire par application du procédé de protection,
- La figure 14 représente un exemple de construction d'une variable booléenne vectorielle à partir d'un circuit représenté au niveau structurel, et
- La figure 15 représente un autre exemple de construction de variable globale à partir de signaux de sémantique hétérogène.

**Description détaillée**

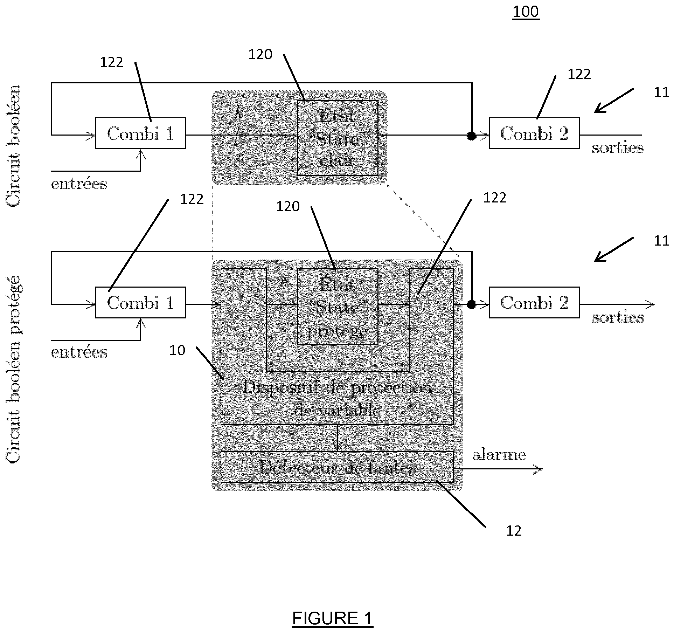

La Figure 1 représente de manière schématique un système de protection 100 d'un circuit électronique 11 destiné à protéger un circuit 11, selon certains modes de réalisation.

Le système de protection 100 comprend un dispositif de protection de variable 10 comprenant un ensemble d'éléments de protection de circuits configurés pour protéger une ou plusieurs variables du circuit électronique 11 afin de prévenir l'insertion d'un circuit malicieux, tel qu'un cheval de Troie, dans le circuit 11. Le système de protection 100 peut en outre comprendre un détecteur de fautes 12 comprenant un ensemble d'éléments de circuits de détection configurés pour détecter une faute injectée par un circuit malicieux (par exemple cheval de Troie) pour compléter la protection du circuit, par exemple dans les cas où l'insertion du circuit malicieux ne pourrait être empêchée et donc entraver le fonctionnement du circuit malicieux.

Il convient de noter que la représentation de la figure 1 est une représentation schématique pour faciliter la compréhension de l'invention. En pratique, les éléments du dispositif de protection de variable 10 et les éléments du détecteur 12 du système 100 peuvent être implémentés directement sur le circuit 11, par combinaison avec certains composants du circuit.

Le circuit 11 est circuit booléen généré à partir d'une description structurelle binaire où les variables du circuit sont représentées par des variables booléennes élémentaires, chacune représentée par un bit.

Le circuit 11 peut être de tout type comme par exemple un circuit de type ASIC, FPGA ou CPU.

Par exemple, le circuit booléen peut être un circuit numérique synchrone dont les éléments séquentiels sont cadencés par une seule et même horloge. À chaque événement d'horloge (par exemple front d'horloge montant), les éléments séquentiels (e.g. bascules) échantillonnent leurs entrées qui peuvent ainsi se retrouver recopiées sur leur sortie et être ensuite traitées par un élément combinatoire avant d'être ré-échantillonnées au coup d'horloge suivant. Dans des variantes de réalisation, il peut y avoir plusieurs domaines d'horloge, regroupant un ensemble d'éléments séquentiels et combinatoires.

La suite de la description sera faite principalement en référence à un tel circuit numérique synchrone à titre d'exemple non limitatif.

Un tel circuit 11 peut comprendre un ensemble de portes logiques 12 qu'il est possible de classifier en deux catégories (les portes logiques 12 sont représentées schématiquement sur la figure 1) :

- des portes séquentielles 120, qui mémorisent l'état du circuit (habituellement représentées dans les diagrammes en bloc de représentation des circuits par une boîte, comme un rectangle, muni sur une face d'un petit triangle), et
- des portes combinatoires 122 qui réalisent des calculs intermédiaires : les valeurs résultant des calculs intermédiaires ne sont pas stockées localement mais transmis aux portes séquentielles. En particulier, la logique combinatoire mise en oeuvre par les portes combinatoires est usuellement dédiée à deux usages, à savoir un calcul sur des données et un contrôle des calculs.

Comme cela est connu en soi, les portes logiques sont reliées par des fils sur lesquels circulent des signaux. Les connexions entre les différentes portes logiques d'un circuit 11 peuvent être représentées par un graphe d'interconnexion des portes logiques (« netlist » en langue anglo-saxonne). Les variables stockées dans une porte séquentielle correspondent aux variables qui peuvent être portées par le fil de sortie de la porte.

Un cheval de Troie cible essentiellement les portes séquentielles car elles contiennent l'information utile du circuit, comme des clés cryptographiques, des identifiants, etc.

Les portes séquentielles (encore désignées ci-après par le terme « ressource séquentielle » ou « registre ») peuvent comprendre généralement des points mémoires, comme une bascule (« latch » en langue anglo-saxonne) mais peuvent également comprendre des mémoires (SRAM, FLASH, etc.).

De plus, les portes séquentielles sont aisément repérables dans un circuit par observation microscopique, car elles ont généralement une forme spécifique (par exemple, une bascule est beaucoup plus grosse qu'une porte combinatoire), et elles sont regroupées dans une zone particulière du circuit (correspondant à des bus, les bus désignant un ensemble de bits traités de façon homogène en un ou plusieurs octets).

Les portes séquentielles sont en outre plus facilement intelligibles que les portes combinatoires. En effet, elles sont présentes en petit nombre et regroupées par zones de connexité, alors que les portes combinatoires sont très nombreuses de sorte que la compréhension de leur rôle est complexe (repose sur une abstraction fonctionnelle qui relève de l'interprétation sémantique).

Tel qu'utilisé dans la présente description, le terme « variable » désigne un conteneur capable de porter des données et doté d'opérations de lecture et d'écriture de cette donnée. Cette définition peut correspondre, par exemple, à une porte ou un ensemble de portes logiques séquentielles du circuit 11. De la même façon, un fil ou un ensemble de fils du circuit 11 peut aussi être désigné sous le terme « variable », la lecture et l'écriture se faisant le plus souvent respectivement par mesure et modification du niveau de tension porté par le ou les fils.

Les variables du circuit stockées dans les portes séquentielles seront désignées ci-après par « variables séquentielles ». Une variable séquentielle représente ainsi une donnée contenue dans une ressource séquentielle (porte séquentielle), c'est-à-dire une donnée mémorisée. De telles variables séquentielles stockent l'état du calcul, et leur rôle est particulièrement facile à interpréter dans un circuit. De plus, les registres et les mémoires sont les portes logiques les plus aisées à reconnaître, de part leur grande taille et leur forme caractéristique. Le nombre de ressources séquentielles correspond donc au nombre de variables séquentielles.

Un cheval de Troie désigne un circuit (ensemble de portes séquentielles et combinatoires) configuré pour se connecter à des signaux d'un circuit d'origine 11 (hôte) pour lire et écrire des données de l'hôte à des fins malicieuses. La lecture sert au déclenchement du cheval de Troie (partie dite « trigger » en langue anglo-saxonne) alors que l'écriture sert à l'activation de la charge utile (partie dite « payload » en langue anglo-saxonne).

Par exemple, un cheval de Troie peut être configuré pour scruter les entrées du circuit 11 pour détecter une donnée particulière (ou une séquence de données particulières), ce qui correspond à son activation. Le cheval de Troie pourra alors soit « fauter » le système hôte, soit exfiltrer de l'information en connectant des registres contenant des données sensibles à des registres de sortie du circuit 11.

Le système de protection 100 selon l'invention permet de modifier au moins une variable « claire » de l'hôte 11 (correspondant à un signal ou une porte séquentielle du circuit par exemple) afin que sa signification soit dissimulée à tout circuit malicieux tel qu'un cheval de Troie. Telle qu'utilisée ici, l'expression « variable claire » désigne toute variable non protégée. Ainsi, toute variable « claire » est telle qu'un cheval de Troie pourrait avoir un intérêt à s'y connecter pour réussir son attaque, c'est-à-dire à la fois pour lire sa valeur via sa partie de déclenchement (« trigger ») et écrire une autre valeur via sa partie d'exécution de charge utile (« payload »).

Le procédé de fabrication d'un circuit comprend plusieurs phases successives incluant les phases préalables suivantes :

- Une phase de modélisation du circuit (sur le plan matériel et logiciel) dans laquelle le circuit est modélisé à très haut niveau afin de valider en termes de performance l'architecture choisie par rapport aux contraintes applicatives ;

- Une phase de description en langage haut niveau, après validation de l'architecture en phase de modélisation, dans laquelle l'implémentation du circuit est décrite au niveau transfert de registres (RTL) sous forme d'éléments séquentiels (registres, bascules) et d'éléments combinatoires logiques correspondant aux combinaisons entre les entrées/sorties des éléments séquentiels et les entrées/sorties principales du circuit ; cette description, appelée « description comportementale », est codée à l'aide d'un langage de programmation haut niveau (e.g. RTL, etc.) ;

- Une phase de simulation logique pour simuler la description en utilisant un simulateur. Le simulateur simule dans le temps chaque signal d'interconnexion en fonction d'un stimulus d'entrée décrit au préalable. La simulation peut inclure la simulation du programme exécutable associé au processeur du circuit s'il en contient un ;

- Une phase de vérification fonctionnelle peut être mise en oeuvre en complément de la simulation notamment pour simuler des durées de fonctionnement plus importantes, accélérer la simulation et pour des résultats plus complets, en utilisant des langages basés sur une modélisation par assertion pour définir les propriétés fonctionnelles que doit vérifier le circuit. La vérification fonctionnelle peut être mise en oeuvre à partir de générateurs aléatoires de stimuli avec vérification automatique des résultats par rapport à un modèle de référence, ou à partir d'outils de vérification fonctionnelle formelle ;

- Une phase de synthèse logique dans laquelle la description comportementale du circuit est raffinée en une description structurelle au niveau des portes logiques (« netlist »), à partir d'une bibliothèque de portes logiques (par exemple portes ET, OU, Bascules, etc.) spécifique à la technologie visée et/ou au fondeur qui fabriquera le circuit. La synthèse logique peut prendre en compte diverses contraintes de fonctionnement. La synthèse logique peut être mise en oeuvre au moyen d'un outil EDA configuré pour transformer la description comportementale en langage haut niveau en description structurelle générique (indépendamment de la bibliothèque de portes logiques) en décrivant les éléments logiques combinatoires et séquentiels sous forme générique, puis en les remplaçant par des éléments de la bibliothèque de portes logiques de manière à respecter des conditions portant sur les caractéristiques du circuit (e.g. chemins logiques du circuits) par rapport à des contraintes de temps (par exemple, fréquence de fonctionnement du circuit) et d'espace (taille en silicium). Si les éléments sélectionnés ne satisfont pas les contraintes, l'outil de synthèse peut tester d'autres portes de la bibliothèque. À l'issue de la synthèse logique, un fichier informatique (correspondant à la description structurelle) est obtenu dans un format choisi tel que Verilog, VHDL, EDIF. Ce fichier représente l'instanciation des portes de la bibliothèque et leur interconnexion, représentant le circuit électronique (« netlist »). Une telle représentation ne comprend que des variables booléennes représentées chacune par 1 bit.

Le circuit peut être ensuite fabriqué en usine (fonderie).

L'approche classique de protection d'un circuit ou programme repose sur l'exploitation de sa description comportementale par un développeur qui décrit le circuit ou programme en langage de haut niveau. Une telle description comportementale est généralement assez concise, car la représentation et le traitement des variables sont abstraits. Les variables peuvent être aisément comprises car la description comportementale fournit non seulement la valeur des variables mais aussi leur sens. Dans les approches classiques, le développeur peut donc interpréter les variables de façon sémantique de manière à avoir une maîtrise intellectuelle du code.

Plus précisément, les solutions conventionnelles de protection de circuit protègent individuellement chaque variable « naturelle » en tant qu'octet (vecteur de 8 bits) d'après l'analyse manuelle de la description comportementale. Ceci a pour conséquence qu'il est très difficile d'utiliser des codes de grandes distances (distance minimale et distance duale) et/ou de grande longueur, de sorte que les codes utilisés pour la protection des variables naturelles ne sont pas optimaux. En outre les solutions conventionnelles visent à protéger sélectivement une catégorie spécifique de signaux, comme par exemple les signaux séquentiels qui mémorisent des données, et non les signaux séquentiels qui jouent le rôle de contrôle des données.

Cependant, en pratique, appliquer une protection au niveau de la description comportementale présente un certain nombre d'inconvénients:

- les variables sont protégées de façon unitaire de sorte que la sémantique du circuit à protéger guide la protection, et non les objectifs de sécurité,

- certaines variables, comme par exemple dans l'état de l'algorithme de chiffrement d'AES (Advanced Encryption Standard), sont très courtes (k=8 bits seulement), ce qui nuit à la qualité et à l'efficacité des codes,

- certaines variables implicites, comme des compteurs de boucles, peuvent être omises lors de l'étape de protection.

À la différence de la description comportementale, la description structurelle ne permet pas de donner du sens aux variables booléennes, qui peuvent avoir été obtenues après simplification, fusion entre variables, et dont la représentation n'est pas intuitive.

Toutefois, les inventeurs ont mis au point un système et un procédé de protection de circuit qui s'appuie sur la description structurelle du circuit.

Plus précisément, le système de protection 100 est configuré pour modifier la description structurelle du circuit après la phase de synthèse logique de manière à transformer une ou plusieurs variables en variable(s) protégée(s) en insérant des éléments de circuit directement dans le circuit (éléments 10 de protection de variables), ces éléments permettant de contrôler les changements des variables protégées après la fabrication du circuit. Dans certains modes de réalisation, le système de protection 100 est configuré pour insérer également des éléments de circuit configurés pour détecter les éventuelles fautes injectées dans le circuit (éléments 12 de détection de fautes).

Le circuit est ensuite fabriqué avec de tels éléments de protection (éléments de protection de variables et le cas échéant éléments de détection de faute) qui sont utilisés pour mettre à jour l'état des variables protégées et/ou la détection de faute en fonction des événements d'horloge.

En phase de synthèse logique, le système de protection 100 selon l'invention est configuré pour sélectionner un ensemble de k variables vectorielles booléennes élémentaires (encore appelées ci-après « variables élémentaires ») de la description structurelle du circuit en fonction de critères prédéfinis, chaque variable étant représentée par 1 bit à partir de critères de sélection prédéfinis. Les $k$ variables élémentaires sélectionnées sont ensuite utilisées pour construire une variable globale $x$ de longueur $k$ (i.e. représentée par $k$ bits) par concaténation des variables élémentaires sélectionnées selon un ordre choisi dans un vecteur de k bits. La variable $x$ de taille $k$ claire est ensuite protégée par encodage de son contenu et utilisation d'un vecteur de bit d'aléas, ce qui fournit une variable protégée $z$. L'ordre de la concaténation des k variables peut être arbitraire. Il peut être mémorisé pour être utilisé dans la phase de lecture de la variable protégée $z$ (obtenue par protection de la variable vectorielle booléenne $x$) et/ou pour son écriture.

Plus précisément, le système de protection 100 encode la variable $x$ de longueur $k$ à partir d'un code binaire C de longueur $n$ et de taille $2^k$ ($k$ correspondant à la taille de la variable $x$) comprenant un ensemble de mots et appartenant à un espace vectoriel, génère un vecteur de bits d'aléas et l'encode avec le code D supplémentaire du code C dans l'espace vectoriel. Le code C présente une distance minimale $d_C$ donnée, égale à la plus petite distance de Hamming entre deux mots différents du code. Le système de protection 100 encode ensuite le vecteur de bit d'aléas $y$ par le code D avant de l'ajouter sous une telle forme encodée à la variable $x$ encodée par le code C, ce qui fournit une variable protégée $z$, représentée par $n$ bits, qui est substituée à la variable non protégée d'origine x. Le vecteur de bits d'aléas comprend un ensemble de bits aléatoires, non-prédictible. La variable $x$ d'origine du circuit étant substituée par une variable protégée $z$, l'opération d'écriture sur $x$ est elle aussi substituée par une nouvelle opération qui consiste dans un premier temps à encoder $x$ par le code $C$, encoder le vecteur de bit d'aléas $y$ par le code $D$, combiner les deux mots de code ainsi obtenus et écrire le résultat dans la variable $z$. De même, l'opération de lecture sur $x$ est substituée par une nouvelle opération réalisant une lecture sur z puis un décodage permettant de retrouver la variable d'origine $x$. Ces nouveaux opérateurs permettent de remplacer la variable $x$ par une variable protégée $z$ tout en gardant une fonctionnalité identique de lecture et d'écriture de la donnée portée dans le circuit non protégé par *x*. Les éléments de protection de variable déterminés pour encoder et décoder la variable *x* sont insérés dans la description structurelle du circuit. Le choix des opérateurs de codage et décodage est décrit ci-après. Après la fabrication du circuit 11, ces éléments de protection de variable sont utilisés pour mettre à jour l'état des variables protégées en fonction d'un événement d'horloge.

Le système de protection 100 est en outre configuré pour déterminer les éléments de détection de faute à insérer dans le circuit pour entraver à la fois le bon fonctionnement du déclenchement (« trigger ») et de l'exécution de la charge utile (« payload ») d'un cheval de Troie introduit dans le circuit protégé 11.

Après la fabrication du circuit, les éléments de détection de faute sont utilisés pour surveiller le circuit et déclencher une alarme dès qu'une faute est détectée dans le circuit 11.

A chaque événement d'horloge, la variable *x* claire change théoriquement d'état. Par ailleurs, le générateur du vecteur de bits d'aléas est notamment un générateur de nombres aléatoires apte à mettre à jour le vecteur de bits d'aléas *y* à chaque événement d'horloge (par exemple front montant d'horloge). La variable *z* passe alors à l'état suivant.

Par exemple, appliqués à des variables de type signal, dans un mode opérationnel du circuit (circuit fabriqué) les éléments de protection de variable 10 sont configurés pour mettre à jour la variable protégée *z* à partir de la nouvelle valeur du vecteur de bits d'aléas, puis peut appliquer l'opération de décodage. Appliqué à des variables stockés dans des portes logiques, le système de protection 100 applique le code C, ajoute le vecteur de bits d'aléas encodé à l'entrée des portes, puis applique un décodeur en sortie des portes.

Ainsi, l'accès à la variable non protégée *x* de k bits n'est plus possible. Le système 100 assure ainsi que toute connexion à la variable protégée *z* (valeur de signal ou valeur stockée dans une porte logique séquentielle 120) ne divulgue aucune information sur son contenu (fonction de prévention d'insertion de cheval de Troie), si la connexion n'est réalisée que sur certains bits de *z*.

Le code C et son code supplémentaire D sont préalablement générés de manière à satisfaire une première condition de sécurité relative à la distance duale du code supplémentaire D.

Le code dual $D^\perp$ du code binaire D contient tous les mots de code orthogonaux à ceux de D, ce qui signifie que le produit scalaire entre un mot de code de D et un mot de code de $D^\perp$ est égal à zéro. Quand le code D est linéaire, la distance duale du code supplémentaire D correspond à la distance minimale du code dual de D notée $d_{D^\perp}$.

La première condition de sécurité définit une valeur cible prédéfinie pour la distance duale du code D, tandis que le code C est déterminé de sorte que sa taille est au moins égale au nombre *k* de variables sélectionnées du circuit et est supplémentaire du code D, à partir d'une base de donnée de codes binaires candidats. Quand le code D n'est pas linéaire, la notion de distance duale est associée à une définition plus générale.

En complément, le code C et le code supplémentaire D du code C peuvent être déterminés de manière à satisfaire une condition secondaire de sécurité relative à la longueur *n* du code C et/ou à la distance minimale $d_C$ du code C.

Le code C et le code supplémentaire D peuvent être en outre préalablement déterminés de manière à satisfaire une condition secondaire de sécurité relative à la quantité $\frac{2^n - 2^k}{2^n - 1}$.

Dans les modes de réalisation où le code C est calculé à partir de la distance duale cible (notée $d_D^\perp$), la protection du circuit 11 est optimisée contre les opérations de déclenchement ou d'injection de charge utile d'un circuit malicieux tel qu'un cheval de Troie. Comme établi par les inventeurs, le choix d'un tel code a pour effet que tout circuit attaquant qui tente de désembrouiller le circuit 11 pour retrouver sa fonctionnalité afin d'identifier parmi les variables (signaux et/ou portes) celles qui sont sensibles (donc présentant un intérêt pour un cheval de Troie), ne pourra pas insérer de cheval de Troie sauf s'il se connecte à un nombre de fils du circuit au moins égal à la distance duale (notée $d_D^\perp$) du code D supplémentaire de C pour annuler l'effet des bits d'aléas et ainsi pouvoir utiliser les bits en clair, à des fins de déclenchement (trigger).

En effet, pour un masque *y* uniformément distribué et pour D ayant une distance duale $d_D^\perp$, tout tuple de coordonnées de *yH* est équilibré s'il est composé de 1, 2,..., $(d_D^\perp - 1)$ bits (A. Samad Hedayat, Neil James Alexander Sloane, and John Stufken. Orthogonal Arrays, Theory and Applications. Springer series in statistics. Springer, New York, 1999. ISBN 978-0-387-98766-8). Ainsi, les $d < d_D^\perp$ bits de la variable *z* que l'attaquant sonde sont masqués par un chiffre de Vernam (c'est-à-dire un « masque jetable » non prévisible).

Cependant, pour que le système attaquant tente de se connecter à un tel nombre de fils $d_D^\perp$, le cheval de Troie sera nécessairement de grande taille et sera donc repérable par des moyens classique de visualisation ou d'analyse d'effet de bord (surplus de consommation, etc.).

Le code C utilisé pour encoder les variables peut être en particulier un code C linéaire. La suite de la description sera faite en référence à l'utilisation d'un code binaire linéaire de type sous-espace vectoriel du corps fini $F_2^n$ et à des variables de type variables séquentielles (variables dépendant de valeurs précédemment calculées et stockées en mémoire de stockage, comme les variables en sortie des registres et/ou des mémoires du circuit protégé 11), à titre d'exemple non limitatif.

Le code C est caractérisé par des paramètres *n, k,* et $d_C$ tels que :

- *n* désigne la longueur du code,
- *k* désigne le nombre de bits d'information utiles (avant codage), aussi appelé « dimension », et
- $d_C$ désigne la distance de Hamming minimale entre deux mots différents du code.

Le rendement *r* du code C désigne le rapport *r=k/n*. Le surcoût lié au codage se mesure via le rendement r des codes (le rendement est défini comme le rapport r entre k et n, r=k/n). Le surcoût est d'autant plus faible que le rendement est élevé. Or le rendement r est d'autant plus élevé que le code est long et/ou de grande taille (d'après le Théorème du codage de source de Claude Shannon). Par conséquent, lorsque le rendement est élevé, à une distance $d_C$ donnée, les mots de code de *n* bits ne sont pas beaucoup plus longs que les mots d'information de *k* bits, et donc le code est efficace. Ainsi, la protection de variables vectorielles obtenues par agrégations d'un grand nombre de bits est favorable à la diminution du surcoût d'implémentation.

La distance minimale $d_C$ peut être choisie de manière suffisamment grande pour que le code puisse détecter et/ou corriger des erreurs en laissant croître les paramètres *n* et *k*. Dans la suite de la description, la détection d'erreurs sera principalement considérée.

Le code linéaire C est associé à une matrice génératrice G de taille *k × n* permettant de générer un mot de code c de n bits à partir de la variable *x* de k bits qui est une variable vectorielle booléenne (mot de k bits), selon l'équation 1 suivante :

$$c = xG \qquad \text{(Equation 1)}$$

Une telle notation permet de représenter l'encodage d'une variable *x* par le code *C* de matrice génératrice *G,* ce qui donne le mot de code *c.*

Un code « supplémentaire » D du code C est tel que l'espace complet $F_2^n$ corresponde à la somme directe du code C et du code D selon l'équation suivante :

$$\mathbb{F}_2^n = C \oplus D$$

Tous les éléments du corps

$$\mathbb{F}_2^n$$

peuvent être alors représentés en combinant linéairement, et sous une forme unique, les mots de *C* et de *D*. La matrice génératrice du code *D* est notée *H*. La matrice *H* est de taille *(n - k) × n*. La propriété de supplémentarité entre *C* et *D* s'exprime au moyen de leurs matrices génératrices G et H respectives de la façon suivante :

La matrice $\begin{pmatrix} G \\ H \end{pmatrix}$, de taille *n × n* a un rang maximal de *n*, c'est-à-dire qu'elle est inversible.

En notant *d* les éléments du code D, obtenus par l'image de l'application linéaire qui à *y* associe *yD,* d est donné par l'équation 2 suivante :

$$d = yH \quad \text{(Equation 2)}$$

où

$$y \in \mathbb{F}_2^{n-k},$$

et

$$d \in \mathbb{F}_2^n.$$

Une telle notation permet de représenter l'encodage du vecteur *y* par le code *D* de matrice génératrice *H,* ce qui donne le mot de code *d.*
Ainsi tout élément *z* du corps

$$\mathbb{F}_2^n$$

peut s'écrire :

$$z = xG \oplus yH \quad \text{(Equation 3)}$$

Le dispositif de protection de variable 100 selon l'invention s'appuie sur cette propriété pour injecter des valeurs aléatoires à la variable *x* de *k* bits et réaliser l'opérateur d'écriture sur *z* se substituant à l'opérateur d'origine d'écriture sur *x*. Ainsi le dispositif de protection de variable 10 est configuré pour déjouer une attaque destinée à extraire la variable *x* à partir de la connaissance d'un élément *z* en utilisant le masque aléatoire représenté par *yH*.
L'implantation dans le circuit d'une variable protégée *z* peut être décodée dans la logique combinatoire à partir de la connaissance des matrices génératrices *G* et *H* et du vecteur de bits d'aléas *y*. En effet, l'équation 3 peut être réécrite sous la forme suivante :

$$z = (x \; y)\begin{pmatrix} G \\ H \end{pmatrix}$$

La relation ci-dessus peut être réécrite comme suit:

$$(x \; y) = z\begin{pmatrix} G \\ H \end{pmatrix}^{-1}$$

La notation suivante est ensuite utilisée :

$$(J \; K) = \begin{pmatrix} G \\ H \end{pmatrix}^{-1} \text{(Equation 4),}$$

où J désigne une matrice de taille *n* $\times$ *k* et K désigne une matrice de taille *n* $\times$ (*n* - *k*).
A partir de la variable protégée *z*, de la définition de J et K et donc de *G* et *H* (équation 4), il est possible de déduire les valeurs correspondantes de *x* et/ou *y* puis de *z* selon les équations 5 et 6 :

$$x = zJ \quad \text{(Equation 5)}$$

$$y = zK \quad \text{(Equation 6)}$$

Les équations 5 et 6 correspondent aux opérations de décodage qui permettent de reconstituer les valeurs de *x* et *y* respectivement et de réaliser l'opération de lecture sur *z* se substituant à l'opération d'origine de lecture sur *x* (le codage de x et y en z est inversible). La matrice J représente la matrice de décodage associée à la matrice G de codage. Similairement, la matrice K représente la matrice de décodage associée à la matrice H de codage. Il est à noter que par l'unicité de l'inverse des matrices, les égalités remarquables suivantes sont vérifiées :

$$(J\ K)\begin{pmatrix} G \\ H \end{pmatrix} = I_n = \begin{pmatrix} G \\ H \end{pmatrix}(J\ K) = \begin{pmatrix} GJ & GK \\ HJ & HK \end{pmatrix} = \begin{pmatrix} I_k & O_{k\times(n-k)} \\ O_{(n-k)\times k} & I_{n-k} \end{pmatrix}$$

Avec

$GJ = I_k$;
$GK = 0_{k\times(n-k)}$;
$HJ = 0_{(n-k)\times k}$;
$HK = I_{n-k}$.

Dans les équations ci-dessus, $I_l$ pour $l \in k, n - k$ (donc pour $l = k$ ou $l = n - k$) désigne la matrice carrée de taille $l \times l$ égale à la matrice identité, et $0_{k\times(n-k)}$ désigne la matrice rectangulaire de taille $k \times (n - k)$ qui a toutes ses entrées à 0.

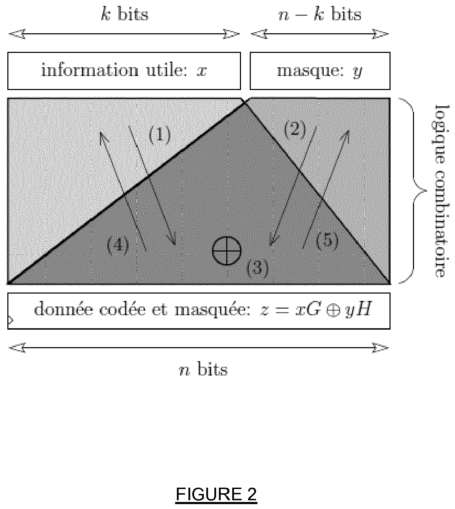

La figure 2 illustre les relations entre la variable $x$ (information utile) de $k$ bits, un masque $y$ de $(n - k)$ bits et une variable protégée $z$ de $n$ bits (donnée codée et masquée).

Cette figure montre que la variable claire $x$ est encodée par un code binaire C déterminé en fonction de la distance duale $d_D^\perp$, puis additionnée à un masque (mot de code $yH$), et stockée dans un registre $z$ de $n$ bits. De cette façon, un attaquant n'a accès qu'à la valeur protégée $z$ qui ne peut laisser fuir d'information utile sur la variable $x$ de k bits (correspondant aux k variables claires d'origine de la description structurelle du circuit) que si au moins un nombre de bits correspondants à la distance duale de D noté $d_D^\perp$ sont lus par un cheval de Troie.

L'espace vectoriel $D^\perp$ est associé à une matrice génératrice H' de taille $k \times n$, permettant de générer un mot de code dual d' de n bits à partir d'un mot $y'$ de $k$ bits :

$$d' = y'H' \quad \text{(Equation 7)}$$

Le code dual $D^\perp$ du code binaire D contient tous les mots de code orthogonaux à ceux de D (i.e. le produit scalaire entre un mot de code de D et un mot de code de $D^\perp$ est égal à zéro).

Cette propriété d'orthogonalité est exprimée sur les matrices génératrices des codes par : $HH'^\top = 0$, où $H'^\top$ désigne la matrice transposée de H'.

La fonction poids de Hamming, notée $w_H$ désigne la fonction qui retourne le nombre de bits armés dans un vecteur de bits.

Formellement, la distance minimale $d_C$ du code $C$ est donnée par la relation :

$$d_c = \min\{w_H(c' \oplus c); c' \text{ et } c \in C \wedge c' \neq c)\}.$$

La distance duale du code C est notée $d_C^\perp$. La distance minimale duale $d_C^\perp$ du code C est donnée par la relation :

$$d_C^\perp = \min\{w_H(c'); c' \in \mathbb{F}_2^n, c' \neq 0 \wedge \sum_{c \in C}(-1)^{c'.c} \neq 0)\}$$

Dans la relation ci-dessus, la notation « c'. c » désigne le produit scalaire canonique des deux vecteurs de bits c' et c.

Il est à noter que la distance minimale et la distance duale de deux codes linéaires orthogonaux vérifient:

$$d_C^\perp = d_{C^\perp} \text{(Equation 8)}$$

On considère un exemple de scénario selon lequel un attaquant cherche à insérer un cheval de Troie qui touche plusieurs fils du circuit, soit à titre de consultation pour le déclenchement du cheval de Troie (« trigger »), soit à titre de modification pour l'exécution de sa charge utile (« payload »). Comme indiqué précédemment, la prévention d'insertion de la partie « trigger » d'un éventuel cheval de Troie est basée sur la propriété de sécurité selon laquelle si un attaquant sonde jusqu'à au plus $(d_D^\perp\text{-}1)$ fils d'une variable z donnée, l'attaquant n'a accès à aucune information sur x si le masque y est uniformément distribué (propriété 1).

La distance duale $d_D^\perp$ du code D représente ainsi un paramètre de sécurité qui peut définir :

- le nombre minimal d'entrées/sorties d'un cheval de Troie qui permet à la partie « trigger » du cheval de Troie de décoder de l'information claire du circuit,
- le nombre minimal de pointes d'un banc de sondage qu'un attaquant doit utiliser pour extraire une information qui comporte des données clair,
- l'ordre minimal d'une attaque côté canal (« side-channel » en langue anglo-saxonne). L'extraction du masque aléatoire y depuis la variable protégée z (Equation 6) ne permet pas de fournir d'information claire à l'attaquant. Toutefois, l'attaquant peut encore espérer fauter le contenu de la variable z afin de propager une erreur sur x à travers le décodage de z.

Toutefois, le paramètre y peut servir à détecter la présence d'une attaque en injection de fautes, dans certains modes de réalisation, causée soit par la « payload » d'un cheval de Troie, soit par une injection externe (« glitch » de tension, d'horloge, tir laser, etc.) en comparant le vecteur y à zK.

En effet, le détecteur de faute 12 peut déterminer si la relation y = zK est satisfaite (vérification ou test) et en fonction de cette vérification détecter la présence d'une attaque par un circuit malicieux (connexion à des parties du circuit), que ce soit une attaque interne due à la « payload » d'un cheval de Troie ou une attaque externe due à une injection physique d'une perturbation.

Si une faute est injectée sur un mot de code c = xG du code C avec une erreur $\varepsilon$, le mot de code erroné qui en résulte peut se décomposer sous la forme $\tilde{c}$ = c $\oplus$ $\varepsilon$ = xG $\oplus$ $\varepsilon$. En appliquant la matrice K, la relation suivante est obtenue d'après les identités remarquables précédemment énoncées sur les matrices G, H, J et K : $\tilde{c}$K = xGK $\oplus$ $\varepsilon$K = $\varepsilon$K. La donnée $\varepsilon$K correspond au « syndrome » et peut être utilisé dans l'étape de décodage pour corriger l'information.

La fiabilité d'un tel test est basée sur la propriété selon laquelle si un attaquant faute l'état de la variable z avec une répartition uniforme des fautes

$$\varepsilon \in (\mathbb{F}_2^n)^*,$$

alors la probabilité avec laquelle il se fait détecter est : $1 - \frac{2^k - 1}{2^n - 1}$ (Propriété 2).

En complément, l'intégrité des calculs au niveau du code C peut être vérifiée au moyen de l'équation 5 dans la mesure où une erreur sur la variable protégée z peut se propager sur la variable x, ce qui correspond à une injection utile pour l'attaquant. Comme la variable z contient toute l'information sur la variable claire x, une copie de z notée z' peut être conservée et leurs projetés zJ et z'J comparés, c'est-à-dire en faisant la même opération que sur le masque y, mais symétriquement sur la partie informative x (autrement dit en testant si x = zJ). En l'absence de faute(s), les deux quantités x et zj sont égales. Cependant, une différence entre x et zJ est révélatrice d'une injection de faute(s).

Pour détecter une faute, le système de protection 100 peut utiliser le test consistant à vérifier si y = zK. La fiabilité d'un tel test est basée sur la propriété selon laquelle si un attaquant faute l'état de la variable z avec une répartition uniforme des fautes

$$\varepsilon \in (\mathbb{F}_2^n)^*,$$

alors la probabilité avec laquelle il se fait détecter est : $1 - \frac{2^k - 1}{2^n - 1}$ (Propriété 2).

En effet, si l'attaquant injecte une faute

$$\varepsilon \in \mathbb{F}_2^n,$$

$z$ est transformée en

$$z \oplus \varepsilon \in \mathbb{F}_2^n.$$

Comme $\varepsilon = 0$ correspond à une faute qui ne modifie pas $z$, c'est-à-dire une absence d'injection de faute, ce cas est éliminé de sorte qu'il est supposé que $\varepsilon$ est uniformément réparti dans

$$\left(\mathbb{F}_2^n\right)^*$$

(notation signifiant

$$\mathbb{F}_2^n$$

privé de zéro). L'hypothèse de répartition uniforme de $\varepsilon$ dans

$$\mathbb{F}_2^n$$

signifie que, si l'attaquant est parvenu à injecter une faute ($\varepsilon \neq 0$), toutes les autres valeurs de $\varepsilon$ sont possibles et équiprobables. Comme

$$\mathbb{F}_2^n$$

correspond à la somme directe de C et D, il existe une unique paire

$$(e, f) \in \mathbb{F}_2^k \times \mathbb{F}_2^{n-k}$$

telle que $\varepsilon = eG \oplus fH$. Une faute est détectable si

$$(z \oplus \varepsilon)K \neq y,$$

Cette condition est équivalente à

$$y \oplus f \neq y,$$

c'est-à-dire $f \neq 0$. Donc, à l'inverse, une faute est non-détectable si $f = 0$, c'est-à-dire $\varepsilon = eG \in C$. Comme, par hypothèse, $\varepsilon$ est uniformément répartie dans

$$\left(\mathbb{F}_2^n\right)^*,$$

la probabilité de non-détection est donc $(2^k - 1)/(2^n - 1)$, ce qui donne une probabilité de détection de $1 - \frac{2^k - 1}{2^n - 1}$.

Il est à noter que cette probabilité de détection de faute ne dépend pas de la distance minimale du code $d_C$. En revanche, pour que la faute ne soit pas détectée, l'attaquant doit injecter une faute $\varepsilon$ dont le poids de Hamming est supérieur ou égal à $d_C$, ce qui correspond selon le modèle d'attaquant à un coût d'injection de la faute. Par ailleurs, dans les modes de réalisation où les fautes de petit poids sont plus probables que les fautes de grands poids, la probabilité de détection peut aussi dépendre de $n$ et de $d_C$.

Il en résulte que si un attaquant se connecte jusqu'à $d_C$ - 1 fils de la variable $z$ et y injecte une faute, alors la probabilité que cette faute soit détectée est de 1 (détection certaine).

Dans les modes de réalisation où le système de protection comprend un détecteur de faute 12, le détecteur de faute 12 peut être déterminé à partir de la propriété de distance minimale du code C.

En effet, une faute $\varepsilon \neq 0$ est non-détectable si et seulement si $\varepsilon \in C$. Tous les éléments non nuls de C ayant un poids de Hamming supérieur ou égal à la distance minimale $d_C$, si la faute $\varepsilon \neq 0$ atteint $d_C$ - 1 fils (ou moins) de $z$, alors $\varepsilon \notin C$, et donc la faute est détectée.

Ainsi, les valeurs

$$1 - \frac{2^k - 1}{2^n - 1} = \frac{2^{\dim(\mathbb{F}_2^n)} - 2^{\dim(C)}}{2^{\dim(\mathbb{F}_2^n)} - 1}$$

et $d_C$ constituent deux autres paramètres de sécurité (dits « secondaires »), qui permettent de quantifier le niveau de sécurité d'un circuit protégé contre les injections de fautes. En fonction du modèle de faute (principalement uniforme ou plutôt de petit poids de Hamming), l'un ou l'autre des paramètres peut être considéré.

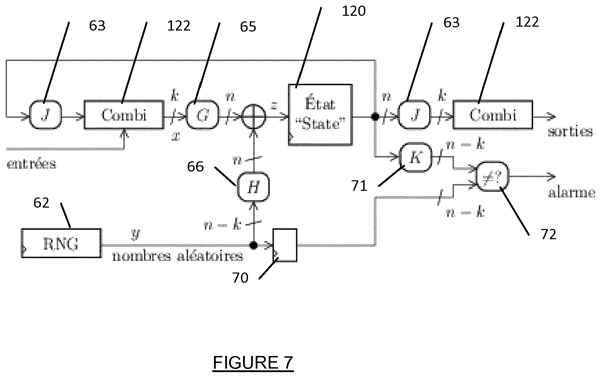

Par ailleurs, dans le cas où l'attaquant serait en mesure de cibler la variable $y$, un nouveau scénario d'attaque peut être envisagé selon lequel le système attaquant pourrait injecter une faute sur la variable $z$ sans être détecté. Un tel scénario consisterait à injecter une faute $\varepsilon$ à la variable $z$ qui produirait le syndrome $\varepsilon K$, et à injecter sur la variable $y$ une faute égale à $\varepsilon K$. De cette façon, le test du détecteur de faute 12 effectuerait la comparaison $(z \oplus \varepsilon)K = y \oplus \varepsilon K$, une telle égalité étant vérifiée pour tout $\varepsilon$. Une telle faute modifierait l'état sans déclencher une alarme (mode de réalisation de la figure 7).

De manière à adresser un tel scénario d'attaque et obtenir une sécurité prouvable, en plus du codage par le code D (supplémentaire du code C), la variable $y$ peut être en outre encodée par un code $E$ de dimension supérieure ou égale à $n$-$k$ et produisant des mots de taille m, associé à une matrice génératrice $L$ et à une matrice de décodage $M$. Le code $E$ est assorti d'un code supplémentaire $F$ dont la matrice de décodage $N$ correspond à la matrice de contrôle de $E$, c'est-à-dire à la matrice permettant de réaliser la détection d'erreur sur $E$. Le code F a par ailleurs une matrice génératrice P de sorte que la relation suivante est vérifiée :

$$\binom{L}{P}^{-1} = (M \quad N).$$

Les codes $E$ et $F$ peuvent, de la même manière que les codes $C$ et $D$, être supplémentaires dans l'espace vectoriel

$$\mathbb{F}_2^n$$

à titre d'exemple non limitatif, ce qui correspond au cas particulier m=n.

Dans ce mode de réalisation, la variable aléatoire $y$ utilisée pour la vérification d'injection de faute sur la variable $z$ peut être stockée sous forme codée $y' = yL$. Le détecteur de faute 12 réalise alors les tests $zK = y'M$ et $y'N = 0$. Le premier test permet de vérifier que le système attaquant n'a pas injecté de faute sur la variable $z$ d'un poids de Hamming inférieur à $d_C$, tandis que le deuxième test permet de vérifier que le système attaquant n'a pas injecté de faute sur la variable codée $y'$ d'un poids de Hamming inférieur à la distance minimale du code $E$ notée $d_E$.

Dans un tel mode de réalisation, le coût minimal en poids de Hamming d'une attaque non détectable est $min(d_E, d_C)$. Dans le cas où les fautes sur les variables codées $z$ et $y'$ sont uniformément réparties, et pour des mots de code $E$ de taille m, la probabilité de détection devient :

$$\frac{2^{\dim(\mathbb{F}_2^m)} - 1}{2^{\dim(\mathbb{F}_2^m)}}.$$

Dans les modes de réalisation où le système de protection comprend un détecteur de faute 12, le détecteur de faute 12 peut être déterminé à partir de la propriété de distance minimale du code C et de la distance minimale du code E.

Avantageusement, les opérateurs matriciels $G$, $H$, $J$ et $K$ précédemment définis peuvent être réutilisés, par exemple, dans le cas où $n$ - $k \leq k$, en utilisant le code $C$ à la place du code $E$ ou encore en utilisant le code $D$ à la place du code $E$. Cela permet de conserver une sécurité prouvable contre les attaques en fautes sur les registres codées $z$ et $y'$ tout en réduisant les ressources nécessaires.

Ainsi, dans un mode de réalisation particulier, le code E peut être choisi égal au code D (supplémentaire du code binaire C), la variable $y'$ encodée étant alors de taille $n$-$k$ et égale à $y.H$.

Dans une première forme de réalisation, il est possible d'utiliser le code *D* à la place du code *E* pour coder la variable *y* (tandis que le code supplémentaire F du code E est égal au code binaire C), ce qui fournit *y'* = *yH,* le détecteur de fautes réalisant les tests *zK* = *y'K* et *y'J* = 0. Le coût minimal en poids de Hamming d'une attaque non détectable est alors égal à *min(d_C,d_D)*. Dans le cas où les fautes sur les variables codées *z* et *y'* sont uniformément réparties, la probabilité de détection devient :

$$\frac{2^{\dim(\mathbb{F}_2^n)-1}}{2^{\dim(\mathbb{F}_2^n)}}.$$

En variante, dans une deuxième forme de réalisation, le code E peut être pris égal au code binaire C tandis que le code supplémentaire F du code E est égal au code D supplémentaire du code C, la variable *y* de *(n-k)* bits étant transformée en variable $y_k$ de *n* bits et la variable *y'* encodée étant de taille *n* et égale à $y_k H.$

En particulier, si $n - k \leq k$, il est possible de construire un vecteur $y_k$ de taille k à partir de la variable *y* de taille *n - k*, par exemple en concaténant *y* avec des données constantes ou aléatoires. Il est alors possible de coder $y_k$ avec le code *C* à la place du code *E*. La variable codée *y'* devient alors *y'* = $y_k G$ = $(y \uparrow_k)G$ où l'opérateur « $\uparrow_k$ » désigne l'opération consistant à agrandir la taille du vecteur jusqu'à k, par exemple par du remplissage de données (« padding »). Le détecteur de faute 12 réalise alors un premier test *zK* = $(y'J) \downarrow_{n-k}$ où l'opérateur « $\downarrow_{n-k}$ » désigne l'opération de sélection des *n - k* bits correspondant à *y* dans $y_k$. Le détecteur de faute 12 réalise le deuxième test *y'K* = 0.

Dans cette forme de réalisation, le coût minimal en poids de Hamming d'une attaque non détectable est $d_C$. Dans le cas où les fautes sur les variables codées *z* et *y'* sont uniformément réparties, la probabilité de détection devient là encore :

$$\frac{2^{\dim(\mathbb{F}_2^n)-1}}{2^{\dim(\mathbb{F}_2^n)}}.$$

Le système de protection 100 vérifiant une première condition principale de sécurité relative à la distance duale $d_D^\perp$ pour entraver la lecture de la variable sensible *x*, c'est-à-dire pour entraver l'insertion d'un «trigger» de cheval de Troie, peut permettre en complément de détecter des fautes (« payload » du cheval de Troie) à partir de l'utilisation de codes binaires et notamment de codes linéaires. Ainsi, le système de protection peut vérifier des conditions de sécurité secondaires relatives à un ou plusieurs des paramètres :

- le paramètre

$$\frac{2^{\dim(\mathbb{F}_2^n)-2^{\dim(C)}}}{2^{\dim(\mathbb{F}_2^n)-1}},$$

et/ou
- le paramètre $d_C,$ et/ou
- le paramètre

$$\frac{2^{\dim(\mathbb{F}_2^n)-1}}{2^{\dim(\mathbb{F}_2^n)}},$$

et/ou
- le paramètre $d_D$, et/ou
- le paramètre

$$\frac{2^{\dim(\mathbb{F}_2^n)-1}}{2^{\dim(\mathbb{F}_2^n)}},$$

et/ou
- le paramètre $d_E,$ et/ou

- le parametre

$$\frac{2^{\dim(\mathbb{F}_2^m)-1}}{2^{\dim(\mathbb{F}_2^m)}}.$$

La détection de fautes permet notamment la détection d'un hypothétique d'un cheval de Troie, si celui-ci est déclenché malgré le procédé de prévention d'insertion.

Dans une forme de réalisation particulière, le code supplémentaire du code C peut être le code dual du code C.

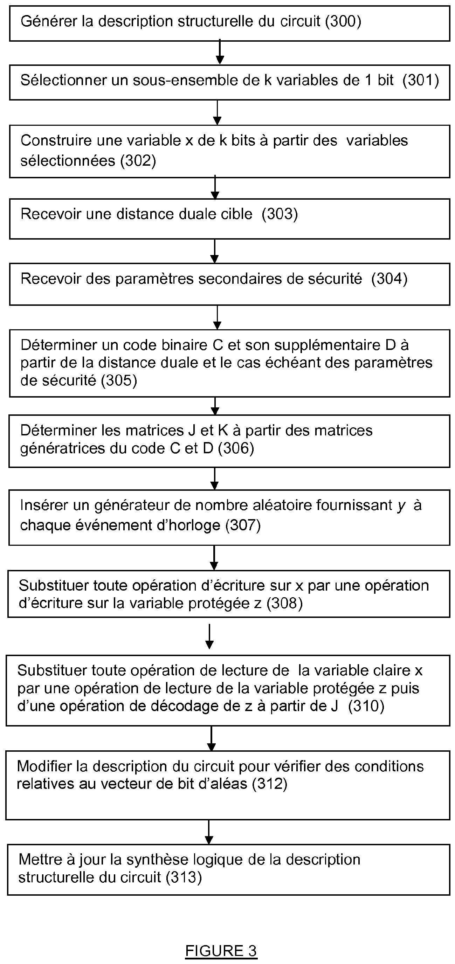

La figure 3 illustre le procédé de protection du circuit selon certains modes de réalisation mis en oeuvre en phase de synthèse logique.

A l'étape 300, une description structurelle du circuit électronique en langage bas niveau est générée à partir d'une description comportementale en langage haut niveau, dans la phase de synthèse logique du circuit, par exemple en utilisant des outils de synthèse logique de type EDA.

La description structurelle comprend une description des variables du circuit 11 et des éléments du circuit 11 tels que les ressources combinatoires, séquentielles et les fils. Les variables du circuit sont représentées par un bit dans la description structurelle.

A l'étape 301, un ensemble des variables élémentaires (représentée chacune par 1 bit) du circuit, telles que décrites dans la description structurelle, est sélectionné à partir d'un ou plusieurs critères prédéfinis comme par exemple des critères de sensibilité ou la prise en compte d'un paramètre de criticité. Les variables élémentaires sélectionnées peuvent être de même nature ou de nature différente (variables hétérogènes). Le nombre de variables sélectionnées est noté k.

Bien entendu, l'invention n'est pas limitée à des critères de sélection particuliers des variables élémentaires. Dans un exemple de réalisation, l'ensemble de toutes les variables élémentaires du circuit peuvent être sélectionnées à l'étape 301 (approche conservatrice). En variante, les critères de sélections mis en oeuvre à l'étape 301 peuvent porter sur le nom des variables lors de la synthèse logique, en utilisant, le cas échéant, des expressions régulières en instruisant l'outil de synthèse de manière à conserver le nommage des signaux (ou au moins leur radical) dans le graphe d'interconnexion (netlist).

Les systèmes intégrés conçus en couches peuvent comprendre une "racine de la sécurité" (root of trust), qui est une partie qui assure un démarrage intègre d'une plateforme. Dans un tel mode de réalisation, les critères de sélection des variables élémentaires peuvent, en variante, consister à sélectionner les variables booléennes élémentaires associées à la racine de sécurité, ce qui peut être mis en oeuvre en réalisant une synthèse logique hiérarchique qui fournit une description structurelle hiérarchisée du système. Il est alors possible de n'appliquer la protection que sur la (ou les) variables identifiée(s) considérées comme faisant partie de la racine de sécurité.

Dans une autre variante encore, les critères de sélections peuvent porter sur un indicateur de sensibilité associé aux variables dans le graphe d'interconnexion (par exemple par une technique de coloriage ou « tainting »).

A l'étape 302, une représentation des k variables ainsi sélectionnées est générée sous la forme d'une variable unique de k bits, par exemple par concaténation des variables selon un ordre choisi.

A l'étape 303, en fonction des règles de sécurité applicables, un paramètre de sécurité $d_{D\,cible}^{\perp}$ est prédéfini représentant la distance minimale duale cible du code D supplémentaire du code linéaire C utilisé pour l'encodage. Ce paramètre correspond au nombre minimal de variables du circuit auxquelles doit se connecter un cheval de Troie pour récupérer (i.e., décoder) de l'information claire, et donc avoir un comportement utile (du point de vue du système attaquant).

En complément, des paramètres de sécurité secondaires peuvent être reçus (304). Ces paramètres secondaires peuvent comprendre :

- une longueur $n_{cible}$ cible du code, choisie suffisamment courte pour ne pas trop augmenter la taille du circuit après protection,
- une probabilité de détection cible

$$\left(\frac{2^{\dim(\mathbb{F}_2^n)}-2^{\dim(C)}}{2^{\dim(\mathbb{F}_2^n)}-1}\right)_{cible}$$

suffisamment grande, et/ou
- une distance minimale cible $d_{C_{cible}}$ pour le code C suffisamment grande.

A l'étape 305, un code binaire C et son code supplémentaire D sont déterminés à partir du paramètre de sécurité cible $d_{D\,cible}^{\perp}$ et d'une bibliothèque de codes binaires. En particulier, le code binaire C est déterminé de telle sorte que la distance duale de son code supplémentaire D, notée $d_{D}^{\perp}$ atteigne le paramètre de sécurité cible $d_{D\,cible}^{\perp}$. En complément, le code C peut être déterminé de manière à satisfaire des conditions relatives aux paramètres de sécurité secondaires lorsque de tels paramètres ont été prédéfinis à l'étape 304 comprenant:

- une condition liant la longueur du code $n$ à la longueur cible $n_{cible}$: par exemple, le code C peut être déterminé de sorte que sa longueur n soit inférieure à la longueur cible $n_{cible}$, et/ou

- une condition liant la probabilité de détection à la probabilité de détection cible : par exemple, le code C peut être déterminé de sorte que le paramètre $\frac{2^{dim(F_2^n)}-2^{dim(C)}}{2^{dim(F_2^n)}-1}$ soit supérieur ou égal à la probabilité de détection cible $(\frac{2^{dim(F_2^n)}-2^{dim(C)}}{2^{dim(F_2^n)}-1})_{cible}$, et/ou

- une condition liant à la distance minimale $d_C$ du code à la distance minimale cible $d_{C_{cible}}$ : par exemple, le code C peut être déterminé de sorte que sa distance minimale $d_C$ soit supérieure ou égale à la distance minimale cible $d_{C_{cible}}$.

A l'étape 306, les matrices J et K sont déterminées à partir de la matrice de codage de l'information (G) et du masque (H) (G et H étant connues) selon l'équation 4:

$$(JK) = \begin{pmatrix} G \\ H \end{pmatrix}^{-1} \text{ (Equation 4)}$$

A l'étape 307, la description structurelle du circuit est modifiée de manière à insérer un générateur de nombre aléatoire RNG (acronyme pour «Random Numbers Generators ») configuré pour générer un vecteur de bits d'aléas $y$ représenté par $n - k$ bits d'aléas par période d'horloge lorsque le circuit est opérationnel.

A l'étape 308, la description structurelle du circuit est modifiée de manière à substituer toute opération d'écriture sur $x$ par une opération d'écriture sur une variable protégée $z$ représentée par $n$ bits, la variable $z$ étant obtenue par :

- Encodage de la variable claire $x$ à k bits associée aux k variables d'origine sélectionnées par le code C, soit si le code binaire C est associé à une matrice génératrice $G$ par un nouvel état de $n$ bits correspondant à $xG$ ;

- Encodage du vecteur de bit $y$ par un code de dimension supérieure ou égale à $n-k$, et en particulier par le code supplémentaire D ($y$ est remplacé par $yH$ si le code utilisé pour encoder $y$ a une matrice génératrice $H$), la variable protégée $z$ étant alors obtenue par la relation $z = xG \oplus yH$.

La variable protégée $z$ ainsi obtenue forme une entrée qui alimente un nouveau banc de n registres de 1 bits.

Dans certains cas où la variable est une variable séquentielle constituant l'entrée d'une ressource séquentielle, l'état $x$ courant de variable peut être utilisé pour calculer les sorties de la ressource séquentielle. Or comme la variable $x$ non protégée a été substituée par la variable protégée $z$, l'état courant $x$ est désormais rendu inaccessible. Cependant, la sortie de la ressource séquentielle peut être déterminée à partir du décodage de la variable protégée $z$ à partir de la matrice J déterminée à partir du code C et du code D et plus particulièrement à partir des matrices génératrices du code C et du code D.

Plus généralement, à l'étape 310, toute opération de lecture de la variable $x$ non protégée est remplacée par une opération de lecture de la variable protégée $z$ puis par une opération de décodage de la valeur lue de la variable z en utilisant la matrice de décodage J (selon la relation de l'équation 4 x= zJ).

En complément, dans les modes de réalisation où le procédé de protection du circuit est configuré pour détecter si des fautes ont été injectées dans le circuit (par exemple altération de registres par une faute), le procédé peut comprendre une étape 312 consistant à modifier la description structurelle du circuit de manière à vérifier une ou plus conditions relatives à la valeur du vecteur de bit d'aléas y (encore appelées « conditions de détection de faute ») et à déclencher une alarme lorsqu'au moins une condition de détection de faute est vérifiée.

A l'étape 314, la nouvelle description structurelle du circuit 11 peut être synthétisée, par exemple au moyen d'un EDA du même type que celui utilisé pour générer le circuit 11 à l'étape 300. Cette étape permet d'optimiser le mélange des nouveaux blocs fonctionnels ajoutés directement au circuit 11 pour protéger ses variables.

Le circuit peut alors être fabriqué à partir de la nouvelle description structurelle (graphe d'interconnexion).

Le procédé de protection de circuit contre l'insertion du circuit malicieux et le cas échéant pour détecter les fautes introduites à des fins malicieuses présente l'avantage d'être particulièrement adapté pour une implémentation par un outil EDA, à partir du graphe d'interconnexion. De tels outils EDA peuvent également réaliser des simplifications logiques qui vont diminuer la taille et/ou augmenter la vitesse du circuit protégé.

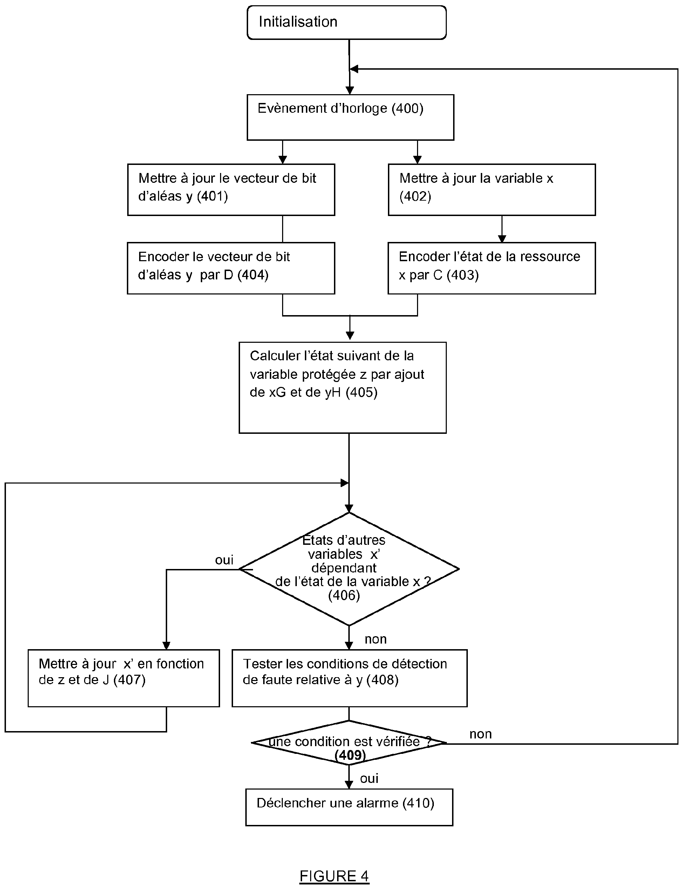

La figure 4 est un organigramme du procédé de protection du circuit en mode opérationnel (après fabrication du circuit) selon certains modes de réalisation. Le circuit est cadencé par une horloge clk.

A l'étape 400, un nouvel événement d'horloge se produit (par exemple front montant d'horloge).

Cet événement déclenche la mise à jour de l'état de la variable claire $x$ à k bits (qui passe à l'état suivant) (401) et la mise à jour du vecteur de bits d'aléas (génération d'un nouveau vecteur de bits d'aléas par le générateur de nombre aléatoire) à l'étape 402.

L'état suivant de la variable $x$ est mis à jour en fonction de l'état courant de la variable $x$. Comme l'état courant de la variable $x$ a été rendu inaccessible en phase de conception, l'état suivant de la variable $x$ est calculé à partir de la quantité $zJ$ qui se substitue à $x$ (Equation 5), où $z$ désigne l'état courant de la variable protégée z, par décodage de $z$ au moyen de la matrice J.

A l'étape 403, le nouvel état de la variable $x$ à k bits ainsi déterminé (correspondant aux k variables d'origine sélectionnées), noté $x_{next}$, est encodé en utilisant le code linéaire C et sa matrice génératrice $G$. Ainsi, le nouvel état $x_{next}$ des k *variables* claires d'origine à 1 bit sont remplacées par un nouvel état de $n$ bits correspondant à $x_{next}G$.

A l'étape 404, l'état suivant de la variable protégée $z$ représentée par $n$ bits, noté $z_{next}$, est calculé, cet état correspondant à la somme de l'état suivant de la variable $x_{next}$ non protégée encodée par le code C et du vecteur $y$ encodé par le code supplémentaire D, selon l'équation $z = x_{next}G \oplus yH$ (H engendrant un espace vectoriel supplémentaire à celui engendré par G).

Le nouvel état $x_{next}$ de la variable $x$ représentant le nouvel état des k variables claires d'origine est ainsi modifié par insertion de nombres aléatoires de telle sorte que toute tentative de connexion à la variable protégée ne divulgue aucune information sur le contenu des k variables d'origine.

Lorsque la variable $x$ est une variable séquentielle et que l'état courant de la variable $x$ du circuit sert à calculer les sorties de la ressource séquentielle associée, à l'étape 406, le nouvel état $z_{next}$ de la variable $z$ obtenue peut être utilisé pour calculer la sortie de la ressource selon l'équation $x_{next} = z_{next}J$ (Equation 5).

Dans les modes de réalisation où le procédé de protection du circuit est configuré pour réaliser la détection de faute, une étape 407 est réalisée pour déterminer si une faute a été injectée dans la ressource associée à la variable du circuit (par exemple altération de registres par une faute) en vérifiant au moins une condition relative au vecteur de bits d'aléas $y$ (étape 408) à partir des matrices J et K, elles-mêmes déterminées à partir des matrices génératrices G et H (en considérant la nouvelle valeur du vecteur de bit d'aléas $y$ générée à l'étape 402). Si une faute est détectée (409), une alarme est déclenchée à l'étape 410. Sinon, le procédé est réitéré au prochain événement d'horloge (étape 400).

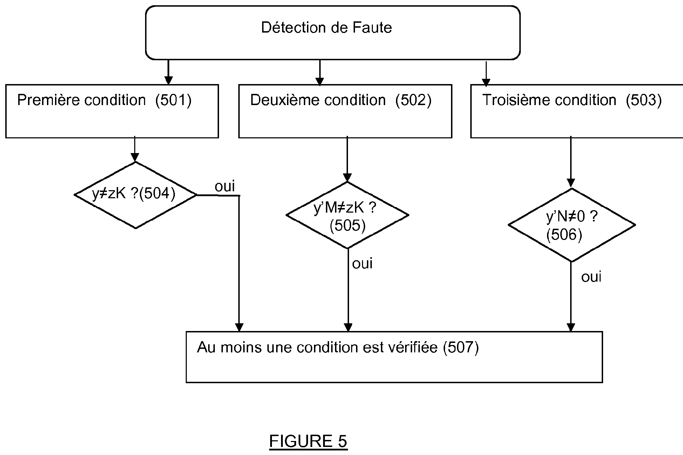

La figure 5 est un organigramme illustrant le procédé de détection de faute (étape 407 de la figure 4), selon certains modes de réalisation.

A l'étape 500, une ou plusieurs conditions relatives au vecteur de bits d'aléa y sont testées pour détecter les fautes injectées sur la variable protégée z.

De telles conditions de détection de faute peuvent comprendre une étape 504 consistant à vérifier une première condition (bloc 501) portant sur la différence entre le vecteur $y$ et la quantité $zK$.

En complément, dans les modes de réalisation où le vecteur de bits d'aléas $y$ est encodé par un code $E$ de dimension supérieure ou égale à $n-k$ et produisant des mots de taille m, le code $E$ étant associé une matrice de décodage $M$ et à un code supplémentaire $F$ ayant une matrice de décodage $N$ correspondant à la matrice de contrôle de $E$ (la variable résultant de l'encodage du vecteur de bit $y$ par le code E étant notée $y'$), le procédé de détection de fautes peut comprendre :

- une étape 505 consistant à vérifier une deuxième condition relative au vecteur de bit d'aléas $y$ (bloc 502), cette deuxième condition étant vérifiée si la quantité $zK$ est différente de la quantité $y'M$, auquel cas cela signifie que le système attaquant a injecté une faute sur la variable $z$ d'un poids de Hamming inférieur à $d_C$) ; et/ou
- une étape 506 consistant à vérifier une troisième condition relative au vecteur de bit d'aléas $y$ (bloc 503), cette troisième condition étant vérifiée si la quantité $y'N$ est différente de zéro, auquel cas il est déterminé que le système attaquant a injecté une faute sur la variable codée $y'$ d'un poids de Hamming inférieur à la distance minimale du code $E$ notée $d_E$.

Le code $E$ peut être associé à une matrice génératrice L de sorte que $y' = yL$. Par ailleurs, le code F peut être associé à une matrice génératrice P de sorte que :

$$\binom{L}{P}^{-1} = (M \quad N).$$

Le procédé de détection de faute peut alors déclencher l'alarme à l'étape 410 de la figure 4 si l'une des conditions relatives au vecteur y est vérifiée (507).

Le procédé de prévention d'insertion de cheval de Troie ainsi que le procédé de détection de fautes peuvent être implémentés à l'aide d'outils de type EDA. De tels outils peuvent également réaliser des simplifications logiques qui diminuent la taille et augmentent la vitesse du circuit protégé 11. Il peut être utile en complément de bien contraindre les outils afin que les optimisations ne suppriment pas (même partiellement) les protections insérées, par exemple en réalisant une re-synthèse par blocs.

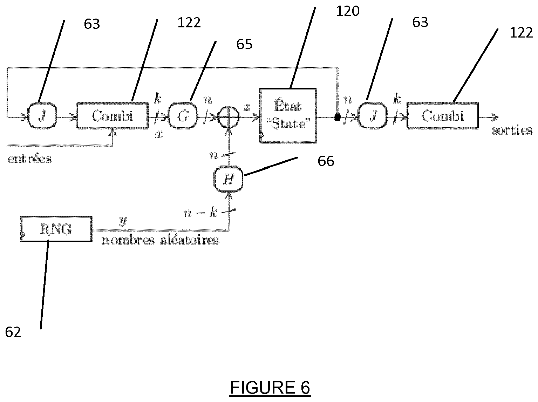

La figure 6 illustre les éléments du système de protection 100 combinés au circuit 11 pour protéger un circuit 11 selon un mode de réalisation.

Le circuit 11 de la figure 6 est un système séquentiel représenté par une machine de Moore. Les portes combinatoires 122 du circuit 11 sont encadrées par deux opérations, une opération de décodage par l'opérateur matriciel *J*, désignée par la référence 63, et une opération de réencodage par G, désignée par la référence 65. Les nombres aléatoires *y* sont générés à partir du générateur de nombre aléatoire 62 (par exemple RNG) qui produit *n* - *k* bits d'aléas par période d'horloge.

Chaque entrée non-claire *x* des parties combinatoires 122 du circuit 11 est ainsi transformée en variable protégée *z* par encodage par le code C de matrice génératrice G et ajout du signal *y* encodé par le code supplémentaire D de matrice génératrice H (66), selon l'équation $z = xG \oplus yH$.

Par exemple, la variable en entrée du registre d'état 120 passe de *k* bits à *n* bits, pendant la transformation.

Par ailleurs, l'opérateur *J* (63) est utilisé pour calculer la quantité $x = zJ$ (Equation 4), et placer le résultat obtenu en sortie du banc de registre de n bits.

La figure 7 représente un système de protection 100 pour protéger le circuit 11 par encodage linéaire, muni d'une unité de détection de faute 12 selon un autre mode de réalisation. L'unité de détection de faute 12 comprend un comparateur 72 pour comparer les bits d'aléas *y* générés par le générateur 62 à la quantité *zK* calculée à partir de l'opérateur matriciel K (71). Lorsque $y \neq zK$ (détection d'une faute injectée dans le circuit), un signal d'alarme peut être déclenché.

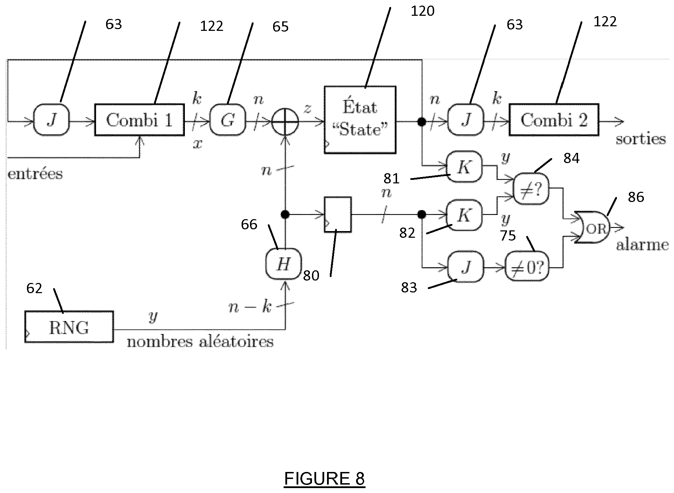

La figure 8 représente un système de protection 100 pour protéger un circuit 11, le système comprenant une unité de détection de faute selon une variante de réalisation.

La figure 8 correspond à la première forme de réalisation où le code E utilisé pour coder la variable *y* (en plus du codage initial par le code D) est choisi égal au code D, tandis que le code supplémentaire F du code E est choisi égal au code binaire C (*y' = yH*). Dans cette forme de réalisation, le détecteur de fautes réalise les tests *zK = y'K* et *y'J = 0*.

Le système de protection 100 de la figure 8 permet la détection d'une faute $\varepsilon$ injectée dans le circuit protégé en déterminant si une condition liant le poids de Hamming de l'erreur $w_H(\varepsilon)$ à l'une au moins des distances minimales $d_C$ et duales $d_D$ est vérifiée.

La faute peut être une faute touchant une variable protégée $z$, la variable $z$ étant alors modifiée en $z \oplus \varepsilon_z$ ou une faute de vérification touchant le vecteur de bits d'aléas encodé $yH$ (variable $yH$ modifiée en

$$yH \oplus \varepsilon_{yH}$$

). Une faute peut alors être détectée si le poids de Hamming $w_H(\varepsilon_z, \varepsilon_{yH})$ est strictement inférieur à min $\{d_c, d_D\}$.

En effet :

- soit l'erreur de vérification

$$\varepsilon_{yH} = 0$$

et donc

$$\varepsilon_z \in \ker (K)^* = C^*$$

et par suite

$$w_H(\varepsilon_z) \geq d_C,$$

- soit l'erreur de vérification

$$\varepsilon_{yH} \neq 0$$

et donc

$$\varepsilon_{yH} \in \ker (J)^*$$

et par suite

$$w_H(\varepsilon_{yH}) \geq d_D.$$

Une nouvelle ressource 80 peut alors être ajoutée pour mémoriser le masque d'une période d'horloge à la suivante.

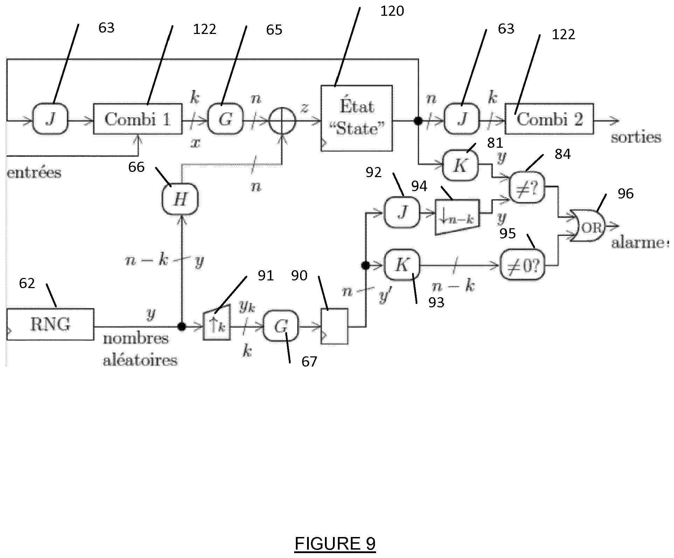

La figure 9 représente un système de protection 100 pour protéger un circuit 11, selon un autre mode de réalisation.

La figure 9 correspond à la deuxième forme de réalisation où le code E est pris égal au code binaire C tandis que le code supplémentaire F du code E est égal au code D supplémentaire du code C, la variable $y$ de *(n-k)* bits étant transformée en variable $y_k$ de $n$ bits et la variable $y'$ encodée étant de taille $n$ et égale à $y_kH$.

Dans ce mode de réalisation, la variable $y$ est encodée par le l'opérateur matriciel G (67) prenant une entrée de taille k pouvant être supérieure ou égale à n-k. Les nombres aléatoires $y$ sont générés avec une taille $(n - k)$ puis complétés par un opérateur de remplissage de donnée 91 pour former un vecteur de k bit $y_k$ contenant $y$. Le vecteur $y_k$ est ensuite codé par l'opérateur matriciel G (67). Pour réaliser le test consistant à déterminer si $y = zK$, la valeur codée stockée en 90 est lue puis décodée par l'opérateur matriciel J (92). Un bloc de décimation 94 est utilisé afin de produire un vecteur $y'$ comprenant $(n - k)$ bits qui sera comparée avec $zK$. Par ailleurs, pour compléter la protection du circuit contre l'exécution de la charge utile d'un cheval de Troie (« payload »), une deuxième opération consistant à décoder la valeur contenue dans 90 par l'opérateur matriciel K (93) puis à effectuer le test de comparaison avec le vecteur nul 95 est effectué.

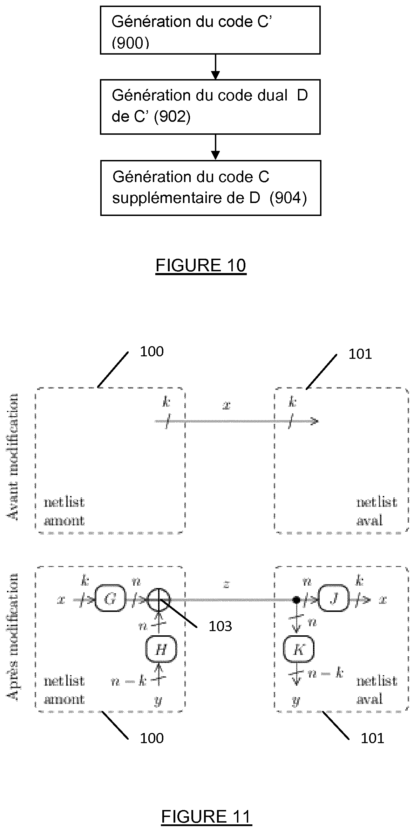

La figure 10 est un organigramme illustrant un procédé de génération des codes C et D (étape 305 de la figure 3), selon un mode de réalisation.

Le procédé de génération de codes peut comprendre une étape préliminaire 900 consistant à déterminer un code C' ayant une dimension $k$ et une distance minimale $d_C,$ au moins égale à $d_D^{\perp}.$ La détermination d'un tel code est toujours possible : en effet, elle équivaut à la résolution du problème $n_2(k,d)$ où $n_q(k,d)$ correspond au plus petit entier $n$ pour lequel il existe un code linéaire de longueur $n$, de dimension $k$, et de distance minimale d, sur le corps de Galois $F_q$. Cependant, un code satisfaisant aura une valeur de $n$ et une valeur de $d_C,$ chacune la plus petite possible : ces deux contraintes sont toutes deux liées, car plus un code est court, plus sa distance minimale est petite. En prenant en compte la borne du Singleton, la relation suivante sera satisfaite :

$$n \geq k + d_{C'} - 1$$

Avantageusement, pour détecter plus de fautes, il est possible de choisir $n$ plus grand que la valeur minimale, ce qui accroît la probabilité de détection de fautes. A titre de simplification, il est supposé qu'il est possible d'obtenir C'

de dimension exactement *k* et de distance minimale exactement $d_D^\perp$, ce qui est fréquemment le cas en pratique. Le code *C'* a donc comme paramètres $[n, k, d_D^\perp]$.

L'étape 900 peut être mise en oeuvre à partir de bases de données telles que décrites dans « Alexandre Duc, Stefan Dziembowski, and Sebastian Faust. Unifying Leakage Models: from Probing Attacks to Noisy Leakage. IACR Cryptology ePrint Archive, 2014:79, 2014 » ou bien à partir de méthodes constructives. L'étape 900 sert à préparer la construction du code dual D car il n'existe pas de méthode adaptée pour trouver des codes de grande distance duale.

A l'étape 902, le code dual de *C'* est calculé. Le code dual est noté $D = C'^T$. D a une comme paramètre une longueur *n,* une dimension *(n-k),* et une distance duale $d_D^\perp$ (équation 7). Ce code satisfait la propriété 1 de sécurité. Il est à noter qu'à ce stade, C' et D ne sont pas nécessairement deux espaces vectoriels supplémentaires du corps

$$\mathbb{F}_2^n.$$

A l'étape 904, D est complété à l'aide de *(n - k)* vecteurs du corps $F_2^n$ pour engendrer tout l'espace

$$\mathbb{F}_2^n$$

(de dimension

$$\dim(\mathbb{F}_2^n) = n$$

). Le sous-espace vectoriel de

$$\mathbb{F}_2^n$$

supplémentaire à D est noté C, de sorte que la relation suivante est vérifiée:

$$C \oplus D = \mathbb{F}_2^n.$$

Les paramètres de C sont [n, k]. Dans les modes de réalisation où le système de protection 100 comprend une unité de détection de fautes 12, le sous-espace vectoriel C peut être avantageusement choisi de distance minimale $d_C$ supérieure à une valeur prédéfinie (conformément au corollaire de la propriété 2 selon laquelle si un système attaquant faute jusqu'à $d_C$ - 1 fils de *z,* alors il peut se faire détecter avec probabilité de 1).

Bien que l'utilisation de codes linéaires présente un intérêt dans certaines applications, l'invention n'est pas limitée à l'utilisation de codes linéaires. Tel qu'utilisé ici, un code non-linéaire ("non-restricted code" en langue anglaise) désigne un sous-ensemble qui n'est pas doté d'une structure d'espace vectoriel. D'autres types de codes peuvent être utilisés comme par exemple les codes $\mathbb{Z}_4$-linéaires, qui ne sont pas en général des codes linéaires dans $\mathbb{F}_2$). Dans les modes de réalisation où un code non-linéaire est utilisé pour l'encodage, le procédé de génération de code peut être alors limité aux étapes 902 et 904, tandis que l'étape 902 inclut directement la recherche d'un code non-linéaire D :

- de longueur *n,*
- de taille 2$^k$,
- de distance duale $d_D^\perp$.

La détermination des matrices G, H, J et K peut par exemple être mise comme décrit dans l'exemple ci-dessous en pseudo-code MAGMA, (les annotations du pseudo-code sont marquées par « // ») :

```
// Entrées:
k:=8; // Nombre de registres dans le circuit original non protégé
d:=5; // Paramètre de sécurité (distance duale du code D)
```

```
// Algorithme pour générer les matrices G, H, J et K:
Cprime:=BLLC(GF(2), k, d); // [n,k,d] of minimal n
n:=Length(Cprime);
D:=Dual(Cprime); // [n,n-k] de distance duale d
F:=UniverseCode(GF(2), n);
C:=ZeroCode(GF(2), n); // Supplémentaire de D
Dtmp:=D;
// Procédure pour remplir le code C
for i := 1 to n do
L:=LinearCode<GF(2), n | F.i>;
if Dimension(Dtmp+L) gt Dimension(Dtmp) then
  Dtmp:=Dtmp+L;
  C := C + L;
end if;
end for;
if C+D ne F then error "C and D are not supplementary"; end if;
// Sorties:
G:=GeneratorMatrix(C) ;
H:=GeneratorMatrix(D);
J:=Submatrix(VerticalJoin(G,H)^-1, 1, 1, n, k);
K:=Submatrix(VerticalJoin(G,H)^-1, 1, k+1, n, n-k);
```

Un exemple de génération de code conformément au procédé de la figure 9 est décrit ci-après :

    1. un code C' est déterminé selon l'étape 900;

    2. Le code supplémentaire D est ensuite déterminé en temps que code dual de C' ($D = C'^{\top}$) selon l'étape 902. La matrice génératrice H de D est écrite sous forme une forme systématique, avec matrice identité à droite, comme indiqué ci-dessous :
$H = (M \ I_{n-k})$, où M est une matrice de taille $(n - k) \times k$ qui calcule les bits de contrôle de *H*.

    3. Le code C est ensuite défini par sa matrice génératrice G = $(I_k \ 0_{(n-k)\times k})$. La matrice carrée $\begin{pmatrix} G \\ H \end{pmatrix}$, de taille $n \times n$, est une matrice triangulaire supérieure avec uniquement des 1 sur la diagonale. Elle est donc inversible.

Il est à noter qu'il est possible de calculer de façon analytique les matrices *J* et *K* à partir de *G* et *H* :

$$\begin{pmatrix} G \\ H \end{pmatrix}^{-1} = \begin{pmatrix} I_k & O_{k\times(n-k)} \\ M & I_{n-k} \end{pmatrix}^{-1} = \begin{pmatrix} I_k & O_{k\times(n-k)} \\ M & I_{n-k} \end{pmatrix} = (JK) \text{ (Equation 9)}$$

La seconde égalité utilise le fait que dans $\mathbb{F}_2$, *-x = x*. Il est à noter que comme une matrice de type $0_{k\times(n-k)}$ n'induit la création d'aucune ressource, et une matrice de type $1_l$ consiste à tirer *l* fils, les matrices G et H sont creuses (à l'exception de la partie M). D'après la relation (9), comme les matrices $J = \begin{pmatrix} I_k \\ M \end{pmatrix}$ et $K = \begin{pmatrix} O_{k\times(n-k)} \\ I_{n-k} \end{pmatrix}$ sont obtenues par regroupement de blocs de G et H, elles sont également creuses.

Il est à noter que le rendement r=k/n d'un code de distance minimale *d* peut être d'autant plus grand que k est grand. Par conséquent, il est avantageux de réaliser le codage sur une multitude de bits. Par ailleurs, le gain en distance minimale devient de plus en plus marginal que *k* devient grand. De telles distances minimales correspondent à des mathématiques discrètes où certaines singularités peuvent se manifester pour des valeurs particulières de k de sorte qu'elles n'ont pas une évolution continue avec la dimension du code. Il peut notamment arriver que la contrainte de la propriété 1 soit atteinte aussi bien pour un code de paramètres [n, k] que pour un code de paramètres [n=2, k=2].

Dans certains modes de réalisation, il peut être par conséquent avantageux pour des raisons de complexité d'implémentation, de construire deux matrices $\left(\frac{k}{2}\right) \times \left(\frac{n}{2}\right)$ plutôt qu'une seule matrice de taille $k \times n$. En effet, le coût de l'implémentation d'une matrice $k \times n$ est $n \log k$ tandis que le coût d'implémentation d'une matrice $\left(\frac{k}{2}\right) \times \left(\frac{n}{2}\right)$ est $\frac{n}{2}\log\frac{k}{2}$, ce qui est inférieur à $n \log k$.

Une telle approche de construction en 2 matrices peut s'appliquer aux matrices G et/ou H et/ou J et/ou K :

- pour la matrice G de taille $k \times n$, le coût d'implémentation de la matrice est $n \log k$, ce qui est supérieur à $2 \times (\frac{n}{2}\log\frac{k}{2})$ ;

- pour la matrice H de taille $(n - k) \times n$, le coût d'implémentation de la matrice est $n \log(n - k)$, ce qui est supérieur à $2 \times (\frac{n}{2}\log\frac{(n-k)}{2})$ ;

- pour la matrice J de taille $n \times k$, le coût d'implémentation de la matrice est $k \log(n)$, ce qui est supérieur à $2 \times (\frac{k}{2}\log\frac{(n)}{2})$ ;

- pour la matrice K de taille $n \times (n - k)$, le coût d'implémentation de la matrice est $(n - k) \log(n)$, ce qui est supérieur à $2 \times (\frac{(n-k)}{2}\log\frac{(n)}{2})$ ;

L'utilisation de plusieurs codes de plus petites dimensions pour encoder l'état du système permet de réduire la taille d'implémentation sans nuire à l'exigence de sécurité.

Dans l'exemple d'une attaque par insertion d'un circuit malicieux de type cheval de Troie, en supposant qu'il ait été activé par «déclenchement» (trigger), le cheval de Troie peut diriger son attaque sur toute partie du circuit comme par exemple :

- les variables qui portent des données de calcul, comme des clés cryptographiques ou des données sensibles, c'est-à-dire qui dépendent à la fois de variables connues et d'une clé ;
- les variables qui contrôlent l'exécution du calcul (par exemple un compteur de tour).

L'attaque mise en oeuvre par le cheval de Troie vise à casser les données, par exemple pour réaliser une injection de faute (exploitable dans certains contextes, comme par exemple en cryptographie). Un autre exemple d'attaque peut être également destinée à corrompre le graphe de contrôle de flot d'un programme, par exemple pour sauter complètement une opération cryptographique ou induire un bug "matériel" qui peut être exploité logiciellement (le cheval de Troie modifie une adresse de retour d'une fonction si telle condition d'activation logicielle a été détectée).

Les modes de réalisation de l'invention offre une protection efficace contre de telles attaques dans la mesure oû ils permettent de protéger un ensemble de variables élémentaires hétérogènes, de la même manière. En effet, les variables élémentaires sont toutes de potentielles cibles pour un attaquant, alors que les approches classiques basées sur la protection individuelle de chaque variable sont susceptibles d'omettre certaines variables formant potentiellement une cible par un cheval de Troie.

Les modes de réalisation de l'invention peuvent mettre en oeuvre un codage qui s'applique dynamiquement et simultanément à un grand nombre de variables binaires hétérogènes, ce qui réduit le risque d'omission de protection d'une variable sensible. La couverture face à une attaque de type « payload » d'un cheval de Troie est ainsi garantie. Un niveau maximal de sécurité peut être atteint lorsque tous les signaux (par exemple, toutes les bascules D) sont codés. Similairement, les modes de réalisation de l'invention peuvent empêcher le bon déclenchement ("trigger") des chevaux de Troie.

La variable $x$ peut être construite à partir d'un ou plusieurs types de variables vectorielles booléennes élémentaires de la description structurelle du circuit 11, ces types de variables pouvant inclure une variable associée à un fil, à une porte séquentielle ou à une porte combinatoire. Par exemple, la variable $x$ peut être :

1. Un signal (vecteur de $k$ fils)

2. Un ensemble de $k$ portes séquentielles (un registre « DFF » de $k$ bits)

3. Un vecteur de $k$ portes combinatoires de type XOR

La figure 11 représente une variable vectorielle $x$ de type signal vectoriel $x$, représentée par k bits, et construite à partir de $k$ variables élémentaires de type signal représentée chacune par un bit. La partie du graphe d'interconnexion (« netlist ») qui nourrit le signal vectoriel $x$ est désignée par la référence 100 (« netlist » amont) tandis que la partie du graphe d'interconnexion qui reçoit en entrée le signal vectoriel $x$ est désignée par la référence 101 (« netlist aval»).

Le procédé de protection de circuit modifie la description structurelle du circuit de manière à insérer dans le circuit, dans la partie amont 100 au signal $x$ à protéger, des éléments de circuit configurés pour remplacer une opération d'écriture sur le signal $x$ par une opération d'écriture sur une variable $z$ obtenue par :

1. codage du signal $x$ par le code C de matrice génératrice $G$, et

2. l'ajout par « ou-exclusif » 103 du masque $y H$.

Ainsi, le signal vectoriel $x$ original est ainsi remplacé par un signal vectoriel protégé $z$, égal à $xG+yH$. Le nombre de bits servant à représenter $xG$, $yH$ et $z$, est désormais égal au paramètre $n$ (longueur du code), avec n de préférence supérieur ou égal à k.

Le procédé de protection de circuit modifie en outre la description structurelle du circuit de manière à insérer dans le circuit, dans la partie aval 101 au signal $x$ à protéger :

- des éléments de circuit configurés pour remplacer une opération de lecture du signal $x$ par une opération de lecture de $z$ suivie d'un décodage permettant de recouvrir le signal vectoriel original $x$ en appliquant la matrice $J$.

- des éléments de circuit configurés pour mettre en oeuvre une vérification d'intégrité sur le vecteur de bits d'aléas $y$, par passage de $z$ dans la matrice $K$; une faute sur la variable z est détectée si le vecteur $y$ diffère de $zK$.

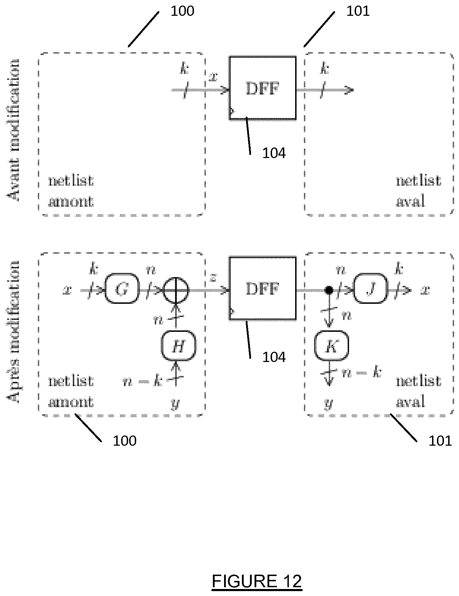

La figure 12 illustre un exemple similaire dans lequel la variable $x$ à protéger est une porte logique séquentielle construite à partir d'une mémorisation de $k$ variables élémentaires de type bits synchrones (banc de $k$ registres à un bit encore appelé « DFF », acronyme de « Data Flip-Flip »).

Cet exemple de réalisation diffère de celui de la figure 11 en ce que les modifications de la partie amont 100 s'appliquent en l'entrée de la DFF 104, alors que les modifications de la partie avale 101 s'appliquent à la sortie de la DFF 104. Lors de cette transformation, la DFF de $k$ bits devient une DFF de $n$ bits. Si l'état initial (après réinitialisation soit à l'allumage, soit sous l'effet d'un signal de remise à zéro) de la DFF 104 d'origine était $x_0$, alors l'état initial de la DFF transformée devient $x_0 G$.

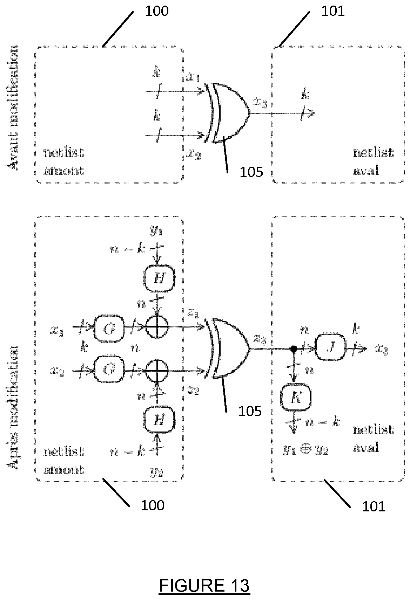

La figure 13 représente une porte combinatoire linéaire 105, telle qu'un « ou-exclusif » (XOR) à deux entrées vectorielles $x_1$ et $x_2$ de $k$ bits, et donc à une sortie $x_3$ de $k$ bits représentée par k bits. Le procédé de protection peut s'appliquer à l'un des deux signaux vectoriels d'entrée $x_1$ et $x_2$ ou au signal vectoriel de sortie $x_3$, comme dans le cas illustré par la première figure. Il est supposé qu'un même code C est choisi pour les 2 entrées $x_1$ et $x_2$ et la sortie $x_3$ de la porte combinatoire 105. Chaque entrée de la porte XOR (considérée individuellement comme une variable x à protéger) est encodée avec la matrice génératrice G du code C. Un masque $y_1H$ et $y_2H$ différent est ajouté. Les deux entrées $z_1$ et $z_2$ sont donc égales à $z_1=x_1G+y_1H$ et $z_2=x_2G+y_2H$. Ces deux entrées sont représentées sur $n$ bits. Grâce à la linéarité de la porte XOR, la sortie $x_3=x_1+x_2$ peut être retrouvée en appliquant la matrice J à la sortie $z_3=z_1+z_2$. Suite à l'addition de $z_1$ et $z_2$, les deux masques ont également été ajoutés sans que cela ne compromette la sécurité, puisque leur distribution reste uniforme. Ainsi, le résultat de $z_3K$ est $y_1+y_2$, ce qui permet de tester l'intégrité de $z_3$.

Il convient de noter qu'il est également possible d'appliquer le procédé de protection à une variable globale $x_1$ construite à partir de $k$ portes XOR à 2 entrées et une sortie.

Il est à noter également que de telles transformations sont compositionnelles, ce qui signifie qu'elles peuvent être appliquées (par récurrence) sur des structures plus complexes qu'un signal vectoriel, un élément de mémorisation vectoriel, ou une porte séquentielle vectorielle.

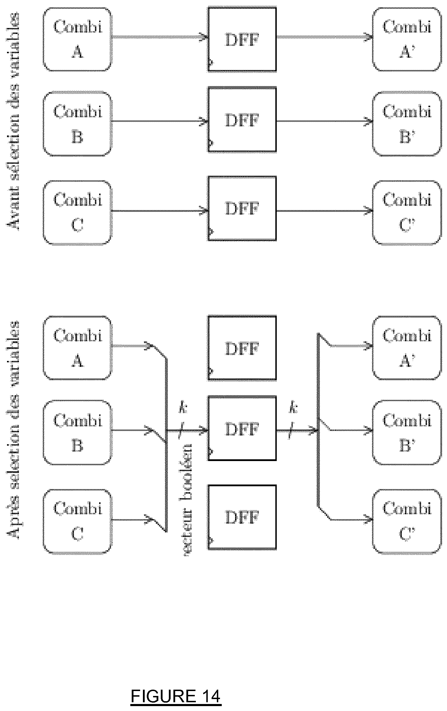

La figure 14 représente un exemple de construction d'une variable booléenne vectorielle à partir d'un circuit représenté au niveau structurel (par exemple par un graphe d'interconnexion, « netlist »). Trois sous-composants indépendants, désignés par A, B et C, alimentent trois signaux booléens, qui entrent dans trois bascules D (DFF) indépendantes. Les DFF produisent chacune un signal booléen de sortie, qui à son tour alimente trois composants indépendants, appelés A', B' et C'.

Les trois DFF traitent des données sans relation. Or, il est possible de les considérer comme un sous-composant artificiel, dont les entrées sont les trois sorties concaténées des sous-composants A, B et C, et dont les sorties sont les trois entrées concaténées des sous-composants A', B' et C'. Dans cet exemple, $k$ est égal à trois. Les trois variables concaténées sont alors représentées comme un bus de k bus, usuellement représenté comme dans la partie inférieure de la figure 13 correspondant à la représentation « après sélection des variables ».

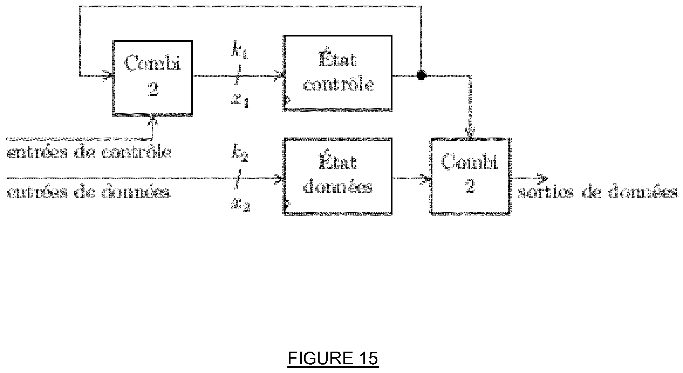

La figure 15 représente un autre exemple de construction de variable globale $x$ à partir de signaux de sémantique hétérogène. Cet exemple correspond plus précisément à la représentation d'un processeur (« CPU », pour « Central Processing Unit ») comprenant :

- Une unité de contrôle, qui est pilotée par des entrées de contrôle x1 (comme par exemple un programme d'ordinateur), et par une table d'évolution des états 110. Cette table est encodée comme un bloc de logique combinatoire 111 (noté « Combi 1 »), qui constitue la machine à états finis (« FSM » en langue anglaise, pour « Finite State Machine ») du processeur CPU.

- Une unité de traitement des données 112, qui est représentée comme un conduit « pipeline », les données $x_2$ entrant dans un registre 113 et étant ensuite traitées par un bloc combinatoire 113 (noté « Combi 2 »), également contrôlé par l'unité de contrôle. Les calculs sont effectués dans le « pipeline ». Le bloc « Combi 2 » peut être considéré, par exemple, comme une unité arithmétique et logique (« ALU », pour « Arithmetic and Logic Unit » en langue anglaise).

Dans le circuit ainsi décrit au niveau structurel, il existe de types hétérogènes de registres : le registre de contrôle de la FSM, qui est représenté par un signal vectoriel $x_1$ de $k_1$ bits, et le registre de données du « pipeline », qui est représenté par un signal vectoriel $x_2$ de $k_2$ bits.

Il est possible de concaténer ces deux signaux, voire de les entrelacer (i.e., de mélanger des bits de $x_1$ et des bits de $x_2$), et de considérer le nouveau vecteur x de $k=k_1+k_2$ bits comme le signal à protéger.

Le système et le procédé de protection de circuit selon les différents modes de réalisation permettent ainsi d'assurer un haut niveau de protection face aux attaques de type cheval de Troie.

Les systèmes et procédés de protection proposés ne nécessitent pas de connaître la signification des variables protégées. Il peut même opérer sur des concaténations de variables élémentaires de type hétérogène, tout en satisfaisant les objectifs de sécurité et de non-régression fonctionnelle. Une fois identifiées les k variables élémentaires et la valeur des objectifs de sécurité définis, la protection peut être appliquée dynamiquement après transformation de la description structurelle d'origine en une autre description structurelle protégée, et compilation de la nouvelle description structurelle.

La mise en oeuvre de la protection du circuit à partir de la description structurelle offre de nombreux avantages, parmi lesquels :

• les variables à protéger sont concaténées en de grands vecteurs de bits, dont la taille est déterminée par les objectifs de sécurité (distance duale ou minimale de codes)

• le procédé est dynamique car il ne dépend pas de la sémantique du circuit, ce qui permet notamment de limiter les coûts de la protection du circuit ;

• les variables globales de k bits étant obtenues par concaténation de k signaux binaires selon un ordre choisi (par exemple arbitraire), le circuit après protection est "obfusqué", ce qui signifie que sa fonctionnalité est plus difficilement compréhensible étant donné l'enchevêtrement entre les signaux opérée par l'application de la protection ;

• enfin, il est possible de réaliser des vecteurs de bits longs, ce qui favorise l'obtention de codes satisfaisant, un code satisfaisant étant un code qui atteint ou dépasse ses objectifs en termes de distance duale ou minimale, et qui a un grand rendement (défini comme le rapport entre sa longueur et sa dimension, dans le cas des codes linéaires).

Les modes de réalisation de l'invention peuvent s'appliquer à tout ensemble de variables booléennes élémentaire, quelle que soit la nature de ces variables : les variables élémentaires à protéger sont manipulées en bloc sous la forme d'un vecteur hétérogène de longueur k, où k peut atteindre quelques milliers de bits.

L'invention favorise ainsi l'utilisation de codes efficaces (code de grande dimension et/ou longueur ayant de grandes distances). Il n'est pas limité par la nécessité de sélectionner et de traiter l'une après l'autre les multiples variables élémentaires à protéger en tenant compte de leur sémantique, et opère ainsi selon une approche dynamique.

C'est un autre avantage de l'invention d'encoder aléatoirement (masquage) des variables séquentielles en sortie de registres, ne permettant pas d'identifier directement l'information, que ce soit pour greffer un cheval de Troie ou pour observer les fuites de variables sensibles par analyse de canaux auxiliaires.

Le procédé de protection selon les différents modes de réalisation peut être combiné avec d'autres procédés classiques de prévention d'insertion de cheval de Troie, comme la mise de tout ou partie de la fonctionnalité en mémoire à programmer après fabrication, l'utilisation d'un placement dense, ou l'obfuscation de structure en portes (aussi connue sur le nom de « netlist » en langue anglo-saxonne).

Les portes logiques de la contremesure qui diffuse les nombres aléatoires peuvent être mélangées avec les portes voisines (au moyen par exemple d'outils EDA), ce qui permet de complexifier la phase initiale d'une attaque qui consiste à réaliser une rétroconception fonctionnelle du circuit. Le mélange dans un même circuit entre les parties combinatoires 122 du circuit 11 et les parties ajoutées par le système de protection 100 (pour l'encodage et le cas échéant pour la détection de fautes) concerne donc aussi bien les parties de calcul sur les données que de contrôle des calculs, ce qui est un avantage supplémentaire pour rendre moins facilement intelligible la description du circuit 11.

Le système de protection 100 selon les différents modes de réalisation peut être utilisé dans de nombreuses applications comme par exemple :

- pour protéger un circuit 11 contre un cheval de Troie, l'encodage aléatoire de l'état ne permettant pas de greffer de la logique pour le cheval de Troie ;

- pour empêcher le « reverse engineering », la fonction du circuit étant noyée avec la logique de décodage/réencodage ;

- pour une protection contre les attaques en sondage (« probing », en langue anglaise), aussi bien en face avant qu'en face arrière ; les attaques en sondages peuvent être de type sondages sous pointe ou sondages par mesure bruitée de signaux émanant du composant (menace encore appelée « analyse de canaux cachés » ; le paramètre de sécurité représentant le nombre de sondes à poser pour réussir l'extraction d'un bit de donnée claire peut être le même que celui utilisé contre l'insertion de cheval de Troie;

- une protection anti-SCA (acronyme pour « Side-Channel Analysis ») c'est-à-dire l'étude des fuites d'informations par la bande (comme par le courant consommé, le champ rayonné, le temps pris par le calcul, etc.) sur les variables séquentielles, la protection des variables empêchant la construction d'un modèle de fuite ;

- une protection contre les attaques en fautes par vérification de l'intégrité de l'aléa (détection de faute), lorsque le système de protection 100 est munie d'une unité de détection 12.

L'invention permet également un masquage indifférent du type d'information, qu'elle soit de type contrôle ou donnée. Des schémas de masquages peuvent alors exister essentiellement sur les données.

Un autre avantage encore est de permettre l'encodage et le réencodage sur la partie combinatoire du circuit indépendamment des propriétés de linéarité booléenne de la logique.

Par ailleurs, la logique du procédé de protection des ressources séquentielles peut être mélangée avec les ressources combinatoires, par simplification lors de la synthèse logique avec les outils de synthèse (EDA).

La méthode de masquage est complètement automatisable, ce qui n'est pas le cas des procédés de masquage existants sur les données. Par ailleurs, la méthode de masquage est prouvable pour vérifier la conformité fonctionnelle du codage.

La vérification des nombres aléatoires selon certains modes de réalisation constitue une protection contre les attaques en injection de faute.

Les codes utilisés peuvent être notamment flexibles. Il est possible d'utiliser des codes supplémentaires duaux dits SuD (« Supplementary Dual » en langue anglaise) pour faciliter les vérifications par projection orthogonale. Certains codes cycliques ont une telle propriété SuD. Par exemple, pour un état à $k = 2163$ bits, il est possible de trouver un code de paramètres [$n = 4327$; $k = 2163$; $d \geq 66$]. Toutefois, il est possible d'utiliser d'autres constructions plus efficaces (en recherchant des codes de taille et de distance minimale données, et en minimisant leur longueur). Bien entendu, l'invention n'est pas limitée à des codes de type SuD. D'autres types de codes peuvent être utilisés pour relâcher les contraintes et obtenir une longueur de codage plus faible. En particulier, il peut être avantageux d'utiliser des codes non-linéaires, pour atteindre une plus grande distance minimale pour une dimension et une longueur donnée.

Un cheval de Troie peut être vu par exemple comme une station de sondage sous pointe intégré au composant que l'on attaque. Or une telle station parvient difficilement à lire ou écrire plus d'une dizaine de signaux. Comme le cheval de Troie est intégré, il peut se connecter à un plus grand nombre de ressources qu'une station externe. Le paramètre de sécurité peut être alors choisi de manière à être assez grand, par exemple de l'ordre de 32 ou 64 bits.

L'unité de détection 12 peut également servir à détecter un cheval de Troie qui aurait été inséré avec succès.

L'homme du métier comprendra que le procédé de protection selon les différents modes de réalisation peut être mis en oeuvre de diverses manières par matériel (« hardware »), logiciel, ou une combinaison de matériel et de logiciels.

L'invention n'est pas limitée aux modes de réalisation décrits ci-avant à titre d'exemple non limitatif. Elle englobe toutes les variantes de réalisation qui pourront être envisagées par l'homme du métier. En particulier, l'invention n'est pas limitée à l'utilisation de codes linéaires, l'utilisation de codes non-linéaires permettant notamment d'atteindre une plus grande distance minimale pour une dimension et une longueur donnée.

Par ailleurs, le système de protection 100 selon l'invention n'est pas limité à un type de circuit booléen 11 particulier. Par exemple, le circuit 11 peut être un circuit ASIC, le système de protection pouvant être utilisé pour prévenir l'insertion d'un cheval de Troie en fonderie, ou encore un circuit FPGA, le système de protection pouvant être utilisé pour prévenir l'insertion d'un cheval de Troie à la compilation d'un flux binaire (« bitstream »). Le circuit 11 peut également correspondre à un programme logiciel décrit par un code binaire, le système de protection pouvant être utilisé pour prévenir l'insertion d'un cheval de Troie à la compilation ou dans le code binaire. Tout comme la description structurelle d'un circuit, un code binaire est une succession de calculs sur des mots binaires. Plus généralement, l'invention porte sur tout type de circuit booléen associé à une description structurelle décrivant un ensemble de calculs sur des variables booléennes élémentaires représentées par des bits, qu'il soit :

- matériel comme par exemple un circuit interconnectant des portes logiques élémentaires, ou
- logiciel comme par exemple une suite de calcul sur des vecteurs de bits (typiquement des octets [k=8], des mots [k=16], des doubles mots [k=32], des quadruples mots [k=64], etc. qui ont des tailles de variables généralement manipulées par des processeurs).

**Revendications**

1. Procédé de protection (100) d'un circuit booléen (11) associé à une description structurelle du circuit comprenant des variables booléennes élémentaires, chacune représentée par un bit, le procédé comprenant les étapes consistant à:

   - sélectionner un ensemble de k variables booléennes élémentaires du circuit en fonction de critères de sélection prédéfinis,
   - construire une variable *x* représentée par k bits par concaténation des k variables sélectionnées, selon un ordre choisi,
   - déterminer un code supplémentaire D en fonction d'une condition portant sur une valeur cible de la distance duale dudit code supplémentaire D ;
   - déterminer un code binaire C, comprenant un ensemble de mots de code et appartenant à un espace vectoriel donné, à partir d'un code supplémentaire D et d'un ensemble de codes binaires candidats, ledit code binaire C ayant une longueur n et une taille 2k, où k désigne le nombre de bits représentant ladite variable x ;
   - substituer la variable *x* dans la description structurelle du circuit booléen par une variable protégée *z* représentée par *n* bits de telle sorte que :

     - toute opération d'écriture sur la variable *x* dans le circuit soit substituée par une opération d'écriture sur la variable *z,* la variable *z* étant générée par ajout de la variable *x* encodée par ledit code *C* à un vecteur de bit d'aléas *y* encodé par le code supplémentaire D, et
     - toute opération de lecture de la variable *x* dans le circuit soit substituée par une opération de lecture de la valeur de la variable protégée *z* et d'une opération de décodage de ladite valeur lue de la variable protégée *z* en utilisant une matrice de décodage *J* de taille *n* x *k* déterminée à partir du code binaire *C* et du code supplémentaire D du code binaire *C*.

2. Procédé de protection de circuit selon la revendication 1, **caractérisé en ce que** l'étape de sélection desdites variables booléennes élémentaires comprend la sélection de variables booléennes élémentaires de natures différentes.

3. Procédé de protection de circuit selon l'une des revendications 1 et 2, **caractérisé en ce que** ledit code binaire *C* est un code linéaire comprenant une matrice génératrice *G* de taille $k \times n$ utilisée pour coder l'état de ladite variable *x* selon la relation *xG,* et **en ce que** ledit code supplémentaire *D* comprend une matrice génératrice *H* de taille $(n - k) \times n$ utilisée pour coder le vecteur *y* de bits d'aléas selon la relation *yH,* la matrice *J* utilisée étant déterminée à partir de la matrice génératrice *G* du code binaire *C* et de la matrice génératrice *H* du code supplémentaire *D.*

4. Procédé de protection de circuit selon l'une des revendications précédentes, **caractérisé en ce qu'**il comprend une étape (312) consistant à détecter une faute injectée sur la variable protégée z en déterminant si une condition relative au vecteur de bits d'aléas est vérifiée, ladite condition étant vérifiée si le vecteur de bits d'aléas *y* est différent de la valeur lue de la variable protégée *z* et décodée par une matrice de décodage K de taille $n \times (n - k)$, ladite matrice K étant déterminée à partir du code binaire C et du code supplémentaire D.

5. Procédé de protection de circuit selon les revendications 3 et 4, **caractérisée en ce que** la matrice de décodage K est déterminée à partir de la matrice génératrice G du code binaire C et de la matrice génératrice H du code supplémentaire D.

6. Procédé de protection de circuit selon l'une des revendications 3 à 5, **caractérisé en ce que** la matrice de décodage J et/ou la matrice de décodage K sont déterminées à partir de la relation : $(JK) = \begin{pmatrix} G \\ H \end{pmatrix}^{-1}$, où G désigne la matrice

EP 2 983 156 B1

génératrice G du code binaire C et H désigne la matrice génératrice du code supplémentaire D.

**7.** Procédé selon l'une des revendications 4 à 6, **caractérisé en ce que** le vecteur de bits d'aléas *y,* encodé par ledit code supplémentaire D, est en outre encodé par un code *E* de dimension supérieure ou égale à *n-k* et produisant des mots de taille m, ledit code étant associé à une matrice de décodage *M* et à une matrice d'encodage *L,* ledit code *E* étant en outre associé à un code supplémentaire *F* ayant une matrice de décodage *N,* correspondant à la matrice de contrôle du code *E,* et une matrice d'encodage *P,* le vecteur de bits d'aléas *y* étant stocké sous une forme *y'* correspondant à l'encodage du vecteur de bits d'aléas par le code *E.*

**8.** Procédé selon la revendication 7, **caractérisé en ce que** l'étape de détection d'une faute injectée sur la variable protégée *z* comprend la vérification d'une condition relative à un test de fautes sur le vecteur de bits d'aléas *y,* ladite condition relative au test de faute étant vérifiée si la quantité *zK,* dépendant de la valeur lue de la variable protégée *z* et de la matrice de décodage K, est différente de la quantité *y'M,* où *y'* désigne le vecteur de bit d'aléa *y* encodé par le code *E* et M désigne la matrice de décodage associée au code E.

**9.** Procédé selon l'une des revendications 7 et 8, **caractérisé en ce que** l'étape de détection d'une faute injectée sur la variable *y'* comprend la vérification d'une condition relative au vecteur de bits d'aléas *y',* ladite condition relative au vecteur de bits d'aléas *y'* étant satisfaite si la quantité *y'N* est différente de zéro.

**10.** Procédé selon l'une des revendications 7 à 9, **caractérisé en ce que** ledit code E est égal au code D, supplémentaire du code binaire C, et **en ce que** le code supplémentaire F du code E est égal au code binaire C, la variable *y'* encodée étant alors de taille *n-k* et égale à *y.H.*

**11.** Procédé selon l'une des revendications 7 à 9, **caractérisé en ce que** le code E est égal au code binaire C et **en ce que** le code supplémentaire F du code E est égal au code D supplémentaire du code C, la variable *y* de *n x k* bits étant transformée en variable $y_k$ de *k* bits et la variable *y'* encodée étant de taille *n* et égale à $y_kG$.

**12.** Procédé de protection de circuit selon l'une des revendications précédentes, **caractérisé en ce que** le code choisi et ledit code supplémentaire sont préalablement générés de manière à satisfaire une condition de sécurité principale relative à la valeur de la distance duale du code supplémentaire par rapport à une valeur cible.

**13.** Procédé de protection de circuit selon la revendication 12, **caractérisé en ce que** le code choisi et ledit code supplémentaire sont préalablement générés de manière à satisfaire une condition de sécurité secondaire relative à la longueur *n* du code C et/ou à la distance minimale $d_C$ du code choisi C.

**14.** Procédé de protection de circuit selon l'une des revendications 12 et 13, **caractérisé en ce que** le code choisi et ledit code supplémentaire sont préalablement générés de manière à satisfaire une condition de sécurité secondaire relative à la quantité $\frac{2^n-2^k}{2^n-1}$.

**15.** Système de protection de circuit (100) comprenant un circuit booléen (11) associé à une description structurelle comprenant des variables booléennes élémentaires, chacune représentée par un bit, lesdites variables élémentaires comprenant un ensemble de k variables vectorielles booléennes élémentaires présélectionnées en fonction de critères de sélection prédéfinis, le système comprenant des éléments de protection insérés dans le circuit configurés pour substituer une variable *x* représentée par k bits et construite par concaténation des k variables élémentaires présélectionnées selon un ordre choisi, par une variable protégée *z* représentée par n bits, lesdits éléments de protection comprenant :

- des éléments de circuit configurés pour remplacer toute opération d'écriture sur la variable *x* par une opération d'écriture sur la variable protégée *z* par ajout de la variable *x* encodée par un code binaire C prédéterminé, comprenant un ensemble de mots de code et appartenant à un espace vectoriel donné, à un vecteur de bit d'aléas encodé par le code supplémentaire D dudit code binaire C, ledit code C ayant une longueur *n* et une taille $2^k$, où k représente le nombre de bits représentant ladite variable *x,* et
- des éléments de circuit configurés pour remplacer toute opération de lecture sur la variable x par une opération de lecture de la valeur de la variable protégée z et une opération de décodage de ladite valeur lue de la variable protégée z en utilisant une matrice J de taille *n x k* déterminée à partir du code binaire C et du code supplémentaire D ;

le code supplémentaire D étant prédéterminé en fonction d'une condition portant sur une valeur cible de la distance duale dudit code supplémentaire D, et le code binaire C prédéterminé à partir d'un code supplémentaire D et d'un ensemble de codes binaires candidats.

**Patentansprüche**

1. Verfahren zum Schutz (100) eines booleschen Schaltkreises (11), verbunden mit einer strukturellen Beschreibung des Schaltkreises, welche elementare boolesche Variablen beinhaltet, wobei eine jede davon durch ein Bit dargestellt wird, wobei das Verfahren folgende Schritte beinhaltet:

   - Auswählen einer Gruppe von $k$ elementaren booleschen Variablen des Schaltkreises anhand von vordefinierten Auswahlkriterien,
   - Konstruieren einer Variable $x$, welche durch $k$ Bits durch Verkettung der $k$ ausgewählten Variablen in einer gewählten Reihenfolge dargestellt wird,
   - Bestimmen eines zusätzlichen Codes $D$ angesichts einer Bedingung, welche sich auf einen Zielwert der dualen Distanz des zusätzlichen Codes $D$ bezieht;
   - Bestimmen eines binären Codes $C$, welcher eine Gruppe von Codewörtern beinhaltet und zu einem gegebenen vektoriellen Raum gehört, anhand eines zusätzlichen Codes $D$ und einer Gruppe von binären Kandidatencodes, wobei der binäre Code $C$ eine Länge $n$ und eine Größe $2^k$ besitzt, wobei $k$ die Anzahl der Bits bezeichnet, welche die Variable $x$ darstellen;
   - Substituieren der Variablen $x$ in der strukturellen Beschreibung des booleschen Schaltkreises durch eine geschützte Variable $z$, welche durch $n$ Bits in der Weise dargestellt wird, dass:

      - jeder Schritt des Schreibens in der Variablen $x$ in dem Schaltkreis durch einen Schritt des Schreibens in der Variablen $z$ substituiert wird, wobei die Variable $z$ durch Hinzufügen der mit dem Code $C$ codierten Variablen $x$ zu einem mit dem zusätzlichen Code $D$ codierten Zufallsbitvektor $y$ erzeugt wird, und
      - jeder Schritt des Lesens der Variablen $x$ in dem Schaltkreis durch einen Schritt des Lesens des Wertes der geschützten Variablen $z$ und einen Schritt des Decodierens des gelesenen Wertes der geschützten Variable $z$ unter Verwendung einer Decodierungsmatrix $J$ der Größe $n \times k$ substituiert wird, welche anhand des binären Codes C und des zusätzlichen Codes $D$ des binären Codes $C$ bestimmt wird.

2. Verfahren zum Schaltkreisschutz nach Anspruch 1, **dadurch gekennzeichnet, dass** der Schritt des Auswählens der elementaren booleschen Variablen die Auswahl elementarer boolescher Variablen unterschiedlicher Natur beinhaltet.

3. Verfahren zum Schaltkreisschutz nach einem der Ansprüche 1 und 2, **dadurch gekennzeichnet, dass** der binäre Code $C$ ein linearer Code ist, welcher eine Erzeugungsmatrix $G$ der Größe $k$ x $n$ beinhaltet, welche verwendet wird, um den Zustand der Variablen $x$ gemäß der Beziehung $xG$ zu codieren, und dadurch, dass der zusätzliche Code $D$ eine Erzeugungsmatrix $H$ der Größe $(n - k)$ x $n$ beinhaltet, welche verwendet wird, um den Zufallsbitvektor y gemäß der Beziehung $yH$ zu codieren, wobei die verwendete Matrix $J$ anhand der Erzeugungsmatrix $G$ des binären Codes $C$ und der Erzeugungsmatrix $H$ des zusätzlichen Codes $D$ bestimmt wird.

4. Verfahren zum Schaltkreisschutz nach einem der vorhergehenden Ansprüche, **dadurch gekennzeichnet, dass** es einen Schritt (312) beinhaltet, welcher darin besteht, einen Fehler zu erkennen, der in die geschützte Variable $z$ injiziert wurde, indem bestimmt wird, ob eine den Zufallsbitvektor betreffende Bedingung verifiziert ist, wobei die Bedingung verifiziert ist, wenn der Zufallsbitvektor y sich von dem in der geschützten Variablen $z$ gelesenen Wert unterscheidet, und durch eine Decodierungsmatrix $K$ der Größe $n \times (n - k)$ decodiert wird, wobei die Matrix $K$ anhand des binären Codes $C$ und des zusätzlichen Codes $D$ bestimmt wird.

5. Verfahren zum Schaltkreisschutz nach den Ansprüchen 3 und 4, **dadurch gekennzeichnet, dass** die Decodierungsmatrix $K$ anhand der Erzeugungsmatrix $G$ des binären Codes $C$ und der Erzeugungsmatrix $H$ des zusätzlichen Codes $D$ bestimmt wird.

6. Verfahren zum Schaltkreisschutz nach einem der Ansprüche 3 bis 5, **dadurch gekennzeichnet, dass** die Decodierungsmatrix $J$ und/oder die Decodierungsmatrix $K$ anhand folgender Beziehung bestimmt wird/werden:

$$(JK) = \begin{pmatrix} G \\ H \end{pmatrix}^{-1}$$

, wobei $G$ die Erzeugungsmatrix $G$ des binären Codes $C$ bezeichnet und $H$ die Erzeugungsmatrix des zusätzlichen Codes $D$ bezeichnet.

**7.** Verfahren nach einem der Ansprüche 4 bis 6, **dadurch gekennzeichnet, dass** der Zufallsbitvektor $y$, welcher durch den zusätzlichen Code $D$ codiert wird, zudem durch einen Code $E$ mit einer Dimension größer oder gleich $n - k$ codiert wird, welcher Wörter der Größe $m$ erzeugt, wobei der Code mit einer Decodierungsmatrix $M$ und einer Codierungsmatrix $L$ verbunden ist, wobei der Code $E$ zudem mit einem zusätzlichen Code $F$ verbunden ist, welcher eine Decodierungsmatrix $N$, welche der Prüfmatrix des Codes $E$ entspricht, und eine Codiermatrix $P$ besitzt, wobei der Zufallsbitvektor $y$ hierin in einer Form $y'$ gespeichert wird, welche der Codierung des Zufallsbitvektor durch den Code $E$ entspricht.

**8.** Verfahren nach Anspruch 7, **dadurch gekennzeichnet, dass** der Schritt des Erkennens eines in die geschützte Variable $z$ injizierten Fehlers die Überprüfung einer Bedingung bezüglich eines Fehlertests am Zufallsbitvektor $y$ beinhaltet, wobei die Bedingung bezüglich des Fehlertests verifiziert wird, wenn die Menge $zK$, abhängig von dem in der geschützten Variablen $z$ gelesenen Wert und der Decodierungsmatrix $K$, sich von der Menge $y'M$ unterscheidet, wobei $y'$ den Zufallsbitvektor $y$ bezeichnet, welcher durch den Code $E$ codiert wird und $M$ die mit dem Code $E$ verbundene Decodierungsmatrix bezeichnet.

**9.** Verfahren nach einem der Ansprüche 7 und 8, **dadurch gekennzeichnet, dass** der Schritt des Erkennens eines in die Variable $y'$ injizierten Fehlers die Überprüfung einer Bedingung bezüglich des Zufallsbitvektors $y'$ beinhaltet, wobei die Bedingung bezüglich des Zufallsbitvektors $y'$ erfüllt ist, wenn die Menge $y'N$ ungleich null ist.

**10.** Verfahren nach einem der Ansprüche 7 bis 9, **dadurch gekennzeichnet, dass** der Code $E$ gleich dem Code $D$ ist, welcher der zusätzliche Code des binären Codes $C$ ist, und dadurch, dass der zusätzliche Code $F$ des Codes $E$ gleich dem binären Code $C$ ist, wobei die codierte Variable $y'$ dabei die Größe $n - k$ besitzt und gleich $y.H$ ist.

**11.** Verfahren nach einem der Ansprüche 7 bis 9, **dadurch gekennzeichnet, dass** der Code $E$ gleich dem binären Code $C$ ist und dadurch, dass der zusätzliche Code $F$ des Codes $E$ gleich dem zusätzlichen Code $D$ des Codes $C$ ist, wobei die Variable $y$ mit $n \times k$ Bits in eine Variable $y_k$ mit $k$ Bits verwandelt wird und die codierte Variable y' eine Variable der Größe $n$ ist und gleich $y_kG$ ist.

**12.** Verfahren zum Schaltkreisschutz nach einem der vorhergehenden Ansprüche, **dadurch gekennzeichnet, dass** der gewählte Code und der zusätzliche Code zuvor in einer Weise erzeugt werden, dass eine Hauptsicherheitsbedingung bezüglich des Wertes der dualen Distanz des zusätzlichen Codes im Vergleich zu einem Zielwert erfüllt wird.

**13.** Verfahren zum Schaltkreisschutz nach Anspruch 12, **dadurch gekennzeichnet, dass** der gewählte Code und der zusätzliche Code zuvor in einer Weise erzeugt werden, dass eine sekundäre Sicherheitsbedingung bezüglich der Länge $n$ des Codes $C$ und/oder die Mindestdistanz $d_c$ des gewählten Codes $C$ erfüllt wird.

**14.** Verfahren zum Schaltkreisschutz nach einem der Ansprüche 12 und 13, **dadurch gekennzeichnet, dass** der gewählte Code und der zusätzliche Code zuvor in einer Weise erzeugt werden, dass eine sekundäre Sicherheitsbedingung bezüglich der Menge $\dfrac{2^n - 2^k}{2^n - 1}$. erfüllt wird.

**15.** Verfahren zum Schaltkreisschutz (100), welches einen booleschen Schaltkreis (11) beinhaltet, verbunden mit einer strukturellen Beschreibung, welche elementare boolesche Variablen beinhaltet, wobei eine jede davon durch ein Bit dargestellt wird, wobei die elementaren Variablen eine Gruppe von $k$ vektoriellen elementaren booleschen Variablen beinhalten, welche angesichts von vordefinierten Auswahlkriterien vorausgewählt sind, wobei das System Schutzelemente beinhaltet, welche in den Schaltkreis eingefügt sind, welche konfiguriert sind, um eine durch $k$ Bits dargestellte Variable $x$, welche durch Verkettung der $k$ vorgewählten elementaren Variablen in einer gewählten Reihenfolge konstruiert wird, durch eine geschützte Variable $z$ zu substituieren, welche durch $n$ Bits dargestellt wird, wobei die Schutzelemente Folgendes beinhalten:

- Schaltkreiselemente, welche konfiguriert sind, um jeden Schritt des Schreibens in der Variablen $x$ durch einen Schritt des Schreibens in der geschützten Variablen $z$ zu ersetzen, durch Hinzufügen der durch einen vorbestimmten binären Code $C$ codierten Variablen $x$, beinhaltend eine Gruppe von Codewörtern und zu einem gegebenen Vektorraum gehörend, zu einem durch den zusätzlichen Code $D$ des binären Codes $C$ codierten Zufallsbitvektor, wobei der Code $C$ eine Länge n und eine Größe $2^k$ besitzt, wobei $k$ die Anzahl der Bits darstellt, welche die Variable $x$ darstellen, und

- Schaltkreiselemente, welche konfiguriert sind, um jeden Schritt des Lesens in der Variablen $x$ durch einen Schritt des Lesens des Wertes der geschützten Variablen $z$ und einen Schritt des Decodierens des gelesenen Wertes der geschützten Variable $z$ unter Verwendung einer Matrix $J$ der Größe $(n \times k)$ zu ersetzen, welche anhand des binären Codes $C$ und des zusätzlichen Codes $D$ bestimmt wird,

wobei der zusätzliche Code $D$ angesichts einer Bedingung vorbestimmt ist, welche einen Zielwert der dualen Distanz des zusätzlichen Codes $D$ betrifft, und der binäre Code $C$ anhand eines zusätzlichen Codes $D$ und einer Gruppe von binären Kandidatencodes vorbestimmt wird.

## Claims

1. Method for protecting (100) a Boolean circuit (11) associated with a structural description of the circuit comprising elementary Boolean variables, each represented by one bit, the method comprising the steps consisting in:

   - selecting a set of $k$ elementary Boolean variables of the circuit as a function of predefined selection criteria,
   - constructing a variable $x$ represented by $k$ bits by concatenation of the $k$ selected variables in accordance with a chosen order,
   - determining a supplementary code $D$ as a function of a condition related to the target value of the dual distance of said supplementary code $D$,
   - determining a binary code $C$ comprising a set of code words and belonging to a given vector space, from a supplementary code $D$ and a set of candidate binary codes, said binary code $C$ having a length $n$ and a size $2^k$, where $k$ designates the number of bits representing said variable $x$;
   - substituting the variable $x$ in the structural description of the Boolean circuit with a protected variable $z$ represented by $n$ bits so that:

     - any operation of writing on the variable $x$ in the circuit is substituted with an operation of writing on the variable $z$, the variable $z$ being generated by adding the variable $x$ encoded by said code $C$ to a random bit vector $y$ encoded by the supplementary code $D$, and
     - any operation of reading the variable $x$ in the circuit is substituted with an operation of reading the value of the protected variable $z$ and an operation of decoding said read value of the protected variable $z$ using a decoding matrix $J$ of size $n \times k$ determined from the binary code $C$ and the supplementary code $D$ of the binary code $C$.

2. Circuit protection method according to claim 1, **characterized in that** the step of selecting said elementary Boolean variables comprises the selection of elementary Boolean variables of different nature.

3. Circuit protection method according to any of claims 1 and 2, **characterized in that** said binary code $C$ is a linear code comprising a generator matrix $G$ of size $k \times n$ used to code the state of said variable $x$ in accordance with the relation $xG$ and **in that** said supplementary code $D$ comprises a generator matrix $H$ of size $(n - k) \times n$ used to code the vector $y$ of random bits in accordance with the relation $yH$, the used matrix $J$ being determined from the generator matrix $G$ of the binary code $C$ and the generator matrix $H$ of the supplementary code $D$.

4. Circuit protection method according to any preceding claim, **characterized in that** it comprises a step (312) consisting in detecting a fault injected into the protected variable z by determining if a condition relating to the random bit vector is verified, said condition being verified if the random bit vector y is different from the value of the protected variable $z$ read and decoded by a decoding matrix $K$ of size $n \times (n-k)$, said matrix $K$ being determined from the binary code $C$ and the supplementary code $D$.

5. Circuit protection method according to Claims 3 and 4, **characterized in that** the decoding matrix $K$ is determined from the generator matrix $G$ of the binary code $C$ and the generator matrix $H$ of the supplementary code $D$.

6. Circuit protection method according to any one of claims 3 to 5, **characterized in that** the decoding matrix $J$ and/or the decoding matrix $K$ are determined from the relation: $(JK) = \left(\begin{smallmatrix} G \\ H \end{smallmatrix}\right)^{-1}$, in which $G$ designates the generator matrix $G$ of the binary code $C$ and $H$ designates the generator matrix of the supplementary code $D$.

7. Method according to any one of claims 4 to 6, **characterized in that** the random bit vector $y$ encoded by said supplementary code $D$ is further encoded by a code $E$ of dimension greater than or equal to $n$-$k$ and producing words of size $m$, said code being associated with a decoding matrix $M$ and an encoding matrix $L$, said code $E$ being further associated with a supplementary code $F$ having a decoding matrix $N$, corresponding to the control matrix of the code $E$, and an encoding matrix $P$, the random bit vector $y$ being stored in a form $y'$ corresponding to the encoding of the random bit vector by the code $E$.

8. Method according to claim 7, **characterized in that** the step of detecting a fault injected into the protected variable $z$ comprises the verification of a condition relating to a fault test on the random bit vector $y$, said condition relating to the fault test being verified if the quantity $zK$, depending on the read value of the protected variable $z$ and on the decoding matrix $K$, is different from the quantity $y'M$, where $y'$ designates the random bit vector $y$ encoded by the code $E$ and $M$ designates the decoding matrix associated with the code $E$.

9. Method according to any one of claims 7 and 8, **characterized in that** the step of detecting a fault injected into the variable $y'$ comprises the verification of a condition relating to the random bit vector $y'$, said condition relating to the random bit vector $y'$ being satisfied if the quantity $y'N$ is different from zero.

10. Method according to any one of claims 7 to 9, **characterized in that** said code $E$ is equal to the Code $D$, supplementary of the binary code $C$ and **in that** the supplementary code $F$ of the code $E$ is equal to the binary code $C$, the encoded variable $y'$ then being of size $n$ - $k$ and equal to $y.H$.

11. Method according to any one of claims 7 to 9, **characterized in that** the code $E$ is equal to the binary code $C$ and **in that** the supplementary code $F$ of the code $E$ is equal to the supplementary code $D$ of the code $C$, the variable $y$ of $n \times k$ bits being transformed into a variable $y_k$ of $k$ bits and the encoded variable $y'$ being of size $n$ and equal to $y_kG$.

12. Circuit protection method according to any one of the preceding claims, **characterized in that** the chosen code and said supplementary code are previously generated so as to satisfy a main security condition relating to the value of the dual distance of the supplementary code relative to a target value.

13. Circuit protection method according to claim 12, **characterized in that** the chosen code and said supplementary code are previously generated so as to satisfy a secondary security condition relating to the length $n$ of the code $C$ and/or to the minimum distance $d_C$ of the chosen code $C$.

14. Circuit protection method according to any one of claims 12 and 13, **characterized in that** the chosen code and said supplementary code are generated beforehand in such a manner as to satisfy a secondary security condition relating to the quantity $\frac{2^n - 2^k}{2^n - 1}$.

15. Circuit protection system (100) comprising a Boolean circuit (11) associated with a structural description comprising elementary Boolean variables, each represented by one bit, said elementary variables comprising a set of $k$ elementary Boolean vectorial variables preselected as a function of predefined selection criteria, the system comprising protection elements in the circuit configured to substitute a variable $x$ represented by $k$ bits and constructed by concatenation of the $k$ preselected elementary variables in accordance with a chosen order with a protected variable $z$ represented by $n$ bits, said protection elements comprising:

   - circuit elements configured to replace any operation of writing on the variable $x$ by an operation of writing on the protected variable $z$ by addition of the variable $x$ encoded by a predetermined binary code $C$, comprising a set of code words and belonging to a given vector space, to a random bit vector encoded by the supplementary code $D$ of said binary code $C$, said code $C$ having a length $n$ and a size $2^k$, where $k$ represents the number of bits representing said variable $x$, and
   - circuit elements configured to replace any operation of reading on the variable x with an operation of reading the value of the protected variable *z* and an operation of decoding said read value of the protected variable *z* using a matrix *J* of size *(n × k)* determined from the binary code *C* and the supplementary code *D*,

the supplementary code *D* being predetermined as a function of a condition related to a target value of the dual distance of said supplementary code *D,* and the binary code *C* being predetermined from a supplementary code *D* and a set of candidate binary codes.

FIGURE 1

FIGURE 2

Générer la description structurelle du circuit (300)

Sélectionner un sous-ensemble de k variables de 1 bit (301)

Construire une variable x de k bits à partir des variables sélectionnées (302)

Recevoir une distance duale cible (303)

Recevoir des paramètres secondaires de sécurité (304)

Déterminer un code binaire C et son supplémentaire D à partir de la distance duale et le cas échéant des paramètres de sécurité (305)

Déterminer les matrices J et K à partir des matrices génératrices du code C et D (306)

Insérer un générateur de nombre aléatoire fournissant $y$ à chaque événement d'horloge (307)

Substituer toute opération d'écriture sur x par une opération d'écriture sur la variable protégée z (308)

Substituer toute opération de lecture de la variable claire x par une opération de lecture de la variable protégée z puis d'une opération de décodage de z à partir de J (310)

Modifier la description du circuit pour vérifier des conditions relatives au vecteur de bit d'aléas (312)

Mettre à jour la synthèse logique de la description structurelle du circuit (313)

FIGURE 3

FIGURE 4

FIGURE 5

FIGURE 6

FIGURE 7

FIGURE 8

FIGURE 9

Génération du code C'
(900)

Génération du code dual  D
de C' (902)

Génération du code C
supplémentaire de D  (904)

FIGURE 10

FIGURE 11

FIGURE 12

EP 2 983 156 B1

FIGURE 13

45

FIGURE 14

FIGURE 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7994042 B2

**Littérature non-brevet citée dans la description**

- **RANDY TORRANCE ; DICK JAMES.** The State-of-the-Art in IC Reverse Engineering, In CHES, volume 5747 of LNCS. Springer, 06 Septembre 2009, vol. 5747, 363-381
- ODETTE : A Non-Scan Design-for-Test Methodology for Trojan Détection in ICs. **M. BANGA ; M. S. HSIAO.** In International Workshop on Hardware-Oriented Security and Trust (HOST). IEEE, 2011, 18-23
- **JARROD A. ROY ; FARINAZ KOUSHANFAR ; IGOR L. MARKOV.** EPIC : Ending Piracy of Integrated Circuits. IEEE, 2008, 1069-1074
- **SHIVAM BHASIN ; JEAN-LUC DANGER ; SYLVAIN GUILLEY ; XUAN THUY NGO ; LAURENT SAUVAGE.** Hardware Trojan Horses in Cryptographic IP Cores. IEEE, 2013, 15-29
- Springer series in statistics. **A. SAMAD HEDAYAT ; NEIL JAMES ALEXANDER SLOANE ; JOHN STUFKEN.** Orthogonal Arrays, Theory and Applications. Springer, 1999
- **ALEXANDRE DUC ; STEFAN DZIEMBOWSKI ; SEBASTIAN FAUST.** Unifying Leakage Models: from Probing Attacks to Noisy Leakage. *IACR Cryptology ePrint Archive,* 2014, vol. 2014, 79